(19) Europäisches Patentamt
European Patent Office
Office européen des brevets

(11) EP 3 851 818 A1

(12) EUROPÄISCHE PATENTANMELDUNG

(43) Veröffentlichungstag:
**21.07.2021 Patentblatt 2021/29**

(21) Anmeldenummer: **20212688.4**

(22) Anmeldetag: **09.12.2020**

(51) Int Cl.:
*G01K 7/36* (2006.01) *G01K 13/06* (2006.01)
*G01K 13/08* (2006.01) *G01K 15/00* (2006.01)
*G01K 1/024* (2021.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(30) Priorität: **15.01.2020 DE 102020100798**

(71) Anmelder: **Noris Automation GmbH**
**18119 Rostock (DE)**

(72) Erfinder:
- **Grigo, Manfred**
  **18119 Rostock (DE)**
- **Katke, Heiner-Joachim**
  **18439 Stralsund (DE)**
- **Marquardt, Leander**
  **18317 Saal (DE)**

(74) Vertreter: **Grünbaum, Annekathrin**
**Schnick & Garrels Patentanwälte PartG mbB**
**Schonenfahrerstraße 7**
**18057 Rostock (DE)**

(54) **ANORDNUNG ZUR BERÜHRUNGSLOSEN MAGNETISCHEN TEMPERATURMESSUNG AN EINEM SICH BEWEGENDEN ODER ZEITWEISE NICHT BEWEGENDEN ODER FESTEN MASCHINENBAUTEIL, VERFAHREN ZUM KALIBRIEREN EINER DERARTIGEN ANORDNUNG UND VERFAHREN ZUR DURCHFÜHRUNG EINER BERÜHRUNGSLOSEN MAGNETISCHEN TEMPERATURMESSUNG AN EINEM SICH BEWEGENDEN, ZEITWEISE NICHT BEWEGENDEN ODER FESTEN MASCHINENBAUTEIL**

(57) Die Erfindung bezieht sich auf die Notwendigkeit und Möglichkeiten zur Überwachung der Temperatur an kritischen Stellen des Triebraumes von Großmotoren oder an anderen sich bewegenden, zeitweise nicht bewegenden oder festen Maschinenbauteilen, beispielsweise eine Anordnung zur berührungslosen magnetischen Temperaturmessung an rotierenden oder gleitenden Maschinenbauteilen. Darüber hinaus bezieht sich die Erfindung auf ein Verfahren zum Kalibrieren einer derartigen Anordnung und auf ein Verfahren zur Durchführung einer berührungslosen magnetischen Temperaturmessung an einem sich bewegenden oder zeitweise nicht bewegenden oder festen Maschinenbauteil.

Für die erfinderische Lösung wird ein paramagnetisches Verhalten ausgenutzt, indem die Magnetfeldstärke eines Permanentmagneten gemessen wird. Da sich bekanntermaßen bei einer Temperaturänderung auch die Magnetfeldstärke des Permanentmagneten ändert, ist die erfindungsgemäße Anordnung sowohl für ein sich bewegendes, zeitweise nicht bewegendes oder festes Maschinenbauteil anwendbar. Insbesondere soll die Erfindung in einem Pleuellager sowie an Laufbuchsen zur Überwachung von gleitenden oder rotierenden Maschinenbauteilen angewendet werden.

Zeichnungen

Φp (TP)
1
2
3
Bereich 1A
Bereich 1B
Tc
T

Fig. 1

EP 3 851 818 A1

## Beschreibung

Die vorliegende Erfindung bezieht sich auf die Notwendigkeit und Möglichkeiten zur Überwachung der Temperatur an kritischen Stellen des Triebraumes von Großmotoren oder an anderen sich bewegenden, zeitweise nicht bewegenden oder festen Maschinenbauteilen, beispielsweise eine Anordnung zur berührungslosen magnetischen Temperaturmessung an rotierenden oder gleitenden Maschinenbauteilen. Darüber hinaus bezieht sich die Erfindung auf ein Verfahren zum Kalibrieren einer derartigen Anordnung und auf ein Verfahren zur Durchführung einer berührungslosen magnetischen Temperaturmessung an einem sich bewegenden oder zeitweise nicht bewegenden oder festen Maschinenbauteil.

Die Erfindung betrifft insbesondere eine Anordnung zur Ermittlung der Pleuellagertemperatur und der Buchsentemperatur im Innern eines Verbrennungsmotors.

Für alle Schiffsmotoren mit einer Leistung größer gleich 2,25 MW ist durch die Klassifikationsgesellschaften eine Triebraumüberwachung zwingend vorgeschrieben. dabei kann zwischen den verschiedenen Verfahren 1) Ölnebeldetektor, 2) Lagertemperaturüberwachung und 3) äquivalenten Maßnahmen gewählt werden. Die fehlende Überwachung der Reibpaarung Kolben/Buchse wird bei Option 2) bewusst toleriert. Eine Kombination der Optionen 1) und 2) ermöglicht eine schnellere Lokalisierung der Ursache für den Ölnebel-Alarm bzw. die Identifikation von dessen Fehlalarmen.

Eine kontinuierliche Überwachung der Reibpaarung Kolben/Buchse für stationäre und Anlagen im Prüffeld ist in Bezug auf Folgeschäden und Personengefährdungen dringend geboten.

Eine Temperaturüberwachung bewegter Lagerschalen (i.d.R. Pleuel) erfolgt derzeit i.d.R. indirekt und zeitlich verzögert über eine Messung der Temperatur des aus der Lagerschale abgespritzten Ölstromes ("SplashOil"). Über eine direkte serienmäßige Erfassung der Lagerrückentemperaturen bewegter Schalen liegen derzeit nur wenige Betriebserfahrungen vor. Die vereinzelt vorgestellten Verfahren mit Radarwellen oder Oberflächen-Akustik erscheinen aufwändig.

Eine Überwachung von Triebräumen großer Motoren ist insofern auch notwendig, dass durch die Überhitzung des Kolbens eines Tauchkolbenmotors sich der im Triebraum gebildete Schmieröl-Nebel entflammen kann und es zu einer Triebraumexplosion kommen kann. Nachfolgende Triebraumexplosionen der anderen Hauptmaschinen können durch die erste Explosion ausgelöst werden. Eine Überwachung von Triebräumen großer Motoren ist insofern notwendig, dass durch die Überhitzung des Kolbens eines Tauchkolbenmotors und/oder übermäßige Wärmeentwicklungen in anderen Bauteilen des Triebraumes sich der im Triebraum gebildete Schmieröl-Nebel entflammen und es zu einer Triebraumexplosion kommen kann. Nachfolgende Triebraumexplosionen weiterer Haupt- und Hilfsmotoren können durch die erste Explosion ausgelöst werden.

Weitere Ursachen für die übermäßige Bildung von Ölnebel stellen neben der Reibpaarung Laufbuchse/Kolben ebenso alle Gleitlager dar. Hierzu zählen insbesondere: Grundlager, Pleuellager, Kreuzkopf (nur bei langsam laufenden Zweitaktern) und ferner die weniger beanspruchten Lagerstellen der Steuerwelle, des Kolbenbolzens sowie des Ventiltriebes.

Eine Triebraumüberwachung für stationäre Anlagen, die häufig mit Gasen gefeuert werden, erscheint ebenso notwendig. Das sekundäre Gefahrenpotenzial, etwa durch eine nachgelagerte Zerstörung der Kraftgasleitungen ist hier jedoch deutlich gegenüber dem Dieselölbetrieb erhöht.

Eine Ölnebelmessung zur Triebraumüberwachung wird i.d.R. durch einen Ölnebeldetektor realisiert. Hierzu werden kontinuierlich an einer oder mehreren Stellen Proben des Triebrauminhaltes (Luft/Ölnebel/Öldampf) entnommen. Als physikalisches Grundprinzip wird zur quantitativen Bewertung ein Durchlichtverfahren verwendet, bei dem die Lichtabsorption (= Optische Trübung) durch die Gasproben (Opazität) ermittelt wird. Das Grundprinzip ist dem eines klassischen optischen Rauchmelders ähnlich. Da aber bereits im störungsfreien Normalbetrieb des Motors im Triebraum ein Gemisch aus Luft mit Anteilen dampfförmigen und feinzerstäubten Schmieröles vorliegt, das abhängig vom Betriebszustand verschiedenste Opazitäten aufweist, ist es schwierig anhand der vorliegenden Probe zu erkennen, ob der derzeitige Betrieb als "Normal" zu bewerten ist und ab wann eine Gefährdung vorliegt. Durch eine definierte "Relative Opazität" kann nur der Anstieg der Trübung im Schadensfall bestimmt werden. Aufgrund des Wirkprinzips kann selbst ein korrekt installiertes System zu Fehlalarmen führen, die automatisch nicht notwendige Notstopps auslösen. Weitaus höheres Gefahrenpotenzial entsteht aus nicht oder zu spät erkannten Gefahrensituationen im Triebraum, bei denen trotz Ölnebeldetektion eine Entzündung des Ölnebels nicht verhindert wird.

Eine weitere Möglichkeit ist der Einsatz einer Lagertemperaturmessung zur Triebraumüberwachung. Hierzu wird ein Thermofühler in den Lagerstuhl eingebracht. Diese Methode setzt allerdings aufgrund der elektrischen Verbindung zur Auswerteeinheit unbewegte Lagerschalen voraus. Dies stellt ein Problem für die hochbelasteten Pleuellagerschalen dar, bei denen die Messung der Lagertemperaturen bestenfalls kurzfristig mit Sensorleitungen, die über eine Kabelschwinge auf das fest stehende Motorgehäuse übertragen werden, erfolgen kann. Die latente Gefahr von Kabelbrüchen, die erforderliche Demontage von Gegengewichten sowie bewegte Zusatzbauteile im Triebraum schränken diese Methode ein.

Abhilfe schafft hier die indirekte Messung der Temperatur des Schmieröles, das aus den Pleuellagern austritt und radial abgespritzt wird (= "SplashOil"). Wird dieses Öl aufgefangen und in einem speziell geformten Trog gesammelt, lässt sich hierin dessen Temperatur messen. Über die Überwachung dieser Hilfsmessgröße lässt sich ein beginnender Pleuellagerschaden erkennen und Gegenmaßnahmen (Voralarm, Lastreduzierung, Lastabwurf, Notstopp) einleiten. Auch das Auffangen des aus den Kolben zurücklaufenden, zur Kolbenkühlung verwendeten Schmieröles und dessen Temperaturmessung mit dem Zweck des Detektierens von Laufbuchsenschäden wurde beschrieben.

Auch für Temperaturmessungen sind prinzipiell verschiedene Ansätze zur Auswertung der aufgenommenen Betriebswerte möglich. Neben der klassischen Definition eines absoluten Temperaturgrenzwertes kann ebenso die MittelwertAbweichung einzelner Zylinder oder der Temperaturanstieg als Kriterium Verwendung finden.

Vor dem Hintergrund, dass durch diese alternativ zulässige Methode der Triebraumüberwachung zwar Fehlfunktionen der überwachten Lagerstellen (i.d.R. nur Grund - und Pleuellager), nicht aber tribologische Probleme der Laufbuchse erkannt werden, können auch beide Arten der Triebraumüberwachung kombiniert werden.

Um mit der Option Lagertemperaturmessung die Absicherungsreichweite der Ölnebel-Detektoren zu erzielen, müsste diese durch eine kontinuierliche Betriebsmessung und Überwachung von repräsentativen Temperaturen der einzelnen Laufbuchsen ergänzt werden. Die Triviallösung des Einsatzes von Thermoelementen im Buchsenmantel wird für den Erprobungsbetrieb im Prüffeld seit Jahrzehnten standardmäßig angewendet, würde aber im regulären Serieneinsatz an der Montageproblematik der mit Ausgleichsleitungen verkabelten Laufbuchse scheitern.

DE 2136809 A1 beschreibt eine Einrichtung zur Überwachung der Temperatur von bewegten Maschinenteilen, insbesondere großer Kolbenmaschinen, wie Schiffsdiesel. Die Überwachung der Temperatur erfolgt durch einen Geber mit einem Thermoelement, welcher auf den Temperaturgradienten zwischen Innentemperatur und Umgebungstemperatur anspricht, und einen Elektromagneten mit einem die Feldstreuung nach außen begünstigenden Polschuh. Ein Empfänger, der magnetfeldempfindliche Elemente enthält, ist in unmittelbarer Nähe der Bahn des Polschuhs angeordnet.

In DE 2156399 A1 wird ein kontaktloser thermischer Überlastungsschutz offenbart. Die Vorrichtung nutzt die Permeabilität eines aus Magnetwerkstoff bestehenden Teils aus, welche sich mit der Temperatur ändert und dessen CuriePunkt der zu erfassenden Temperatur entspricht. Ein in Rotation befindlicher Magnet, welcher mit einem Rotor einer elektrischen Rotationsmaschine verbunden ist, wird mit einem feststehenden Magnetfeld-Erfassungselement zeitweise während des Umlaufes dem Magneten in Gegenüberstellung gebracht. Es wird ein Elektromagnet oder ein Dauermagnet verwendet.

DE 19616258 A1 betrifft ein Verfahren zur indirekten Überwachung der Temperatur eines rotierenden Metallkörpers. Dabei weist der Körper zumindest zwei ferromagnetische Bereiche mit unterschiedlichen magnetischen Permeabilitäten auf. Der magnetische Induktionsfluss wird bei jeder Umdrehung des Körpers durch die beiden aufeinanderfolgenden Bereiche verstärkt. Die Verstärkungen des magnetischen Induktionsflusses übertragen je ein Signal zur Aufnahmeeinrichtung und werden welche in aufeinanderfolgende Spannungssignale umgewandelt. Pro Umdrehung wird zumindest ein Spannungssignal als Referenzwert zwischengespeichert und aus dem Referenzwert und dem zweiten Spannungssignal ein Quotient gebildet, und pro Umdrehung wird dem Quotienten mittels eines vorgebbaren oder vorgegebenen Registers eindeutig ein mit der Temperatur korrelierendes Ausgangssignal zugeordnet.

DE 102014218381 A1 betrifft ein Verfahren zur Messung der Temperatur eines an einem Läufer einer elektrischen Maschine angeordneten Permanentmagneten. Es wird eine von der Temperatur des Permanentmagneten abhängige magnetische Eigenschaft des Permanentmagneten erfasst und daraus die Temperatur des Permanentmagneten ermittelt.

In JP 2006094576 A wird eine Vorrichtung zum genauen Messen der Temperatur eines Rotors in einem Motor offenbart. Ein Temperatursensor misst die Temperatur eines Permanentmagneten, welcher mit einem Rotor in einem Motor verbunden ist, durch elektromagnetische Induktion.

US 2014/355644 A1 beschreibt ein System zum Messen einer physikalischen Eigenschaft, insbesondere der Temperatur eines Lagers und beinhaltet einen Permanentmagneten und einen Magnetsensor. Der Permanentmagnet ist mit einem Teil eines Lagers gekoppelt, wobei in einer Ausführungsform der Permanentmagnet innerhalb des Stators zwischen dem Rotor und dem Stator angeordnet. Der Permanentmagnet kann ein zylinder- oder halbzylinderförmiger Magnet sein. Die Längs- oder Axialrichtung (die auch die Magnetisierungsrichtung ist) des Permanentmagneten ist im Wesentlichen parallel zur Drehachse der Welle ausgerichtet und in einem Loch im Stator befestigt. Der Magnetsensor, ein Halleffekt-Sensor, ist in der Nähe des Permanentmagneten montiert. Die Abtastfläche des Magnetsensors verläuft im Wesentlichen parallel zur Axialrichtung des Permanentmagneten und ist in axialer Richtung vom nächsten Ende des Permanentmagneten versetzt.

DE 102009028749 A1 offenbart eine Vorrichtung zur Bestimmung einer Temperatur eines Rotors einer elektrischen Maschine. Ein Rotor ist drehbar gegenüber einem Stator angeordnet, wobei mit der Welle des Rotors ein Permanentmagnet so befestigt ist, dass seine magnetischen Pole in einer zur Drehachse der Welle senkrechten Ebene liegen. Der Permanentmagnet liegt bezüglich der Welle zentriert über einem Sensor, welcher die magnetische Flussdichte des Permanentmagneten abtastet, woraus die Temperatur des Rotors bestimmt wird.

In DE 602004001444 T2 wird eine magnetische Temperaturmessvorrichtung für drehbar bewegte Teile, insbesondere Kraftfahrzeugreifen, beschrieben, die eine dem drehbar beweglichen Teil zugeordnetes Magnetfeldquelle und ein einem festen Teil zugeordnetes Magnetfeld-Messelement umfasst. Gemessen werden Parameter des Magnetfeldes, welche eine Funktion der Temperatur des drehbar beweglichen Teils sind. Die Magnetfeldquelle weist ein Permanentmagnetelement auf, welches ein magnetisches Feld mit konstantem Betrag und Richtung erzeugt.

Die im Stand der Technik benannten Veröffentlichungen beziehen sich in der Regel auf eine Temperaturmessung mittels Magnetfeldsensoren bei einer konstanten Geschwindigkeit der rotierenden Teile. Die Einflussgrößen "veränderliche Geschwindigkeit" und ein sich ändernder Abstand zwischen Sensor und Permanentmagneten werden außer Acht gelassen.

## Darstellung der Erfindung

Der Erfindung liegt die Aufgabe zugrunde, eine Anordnung und ein Verfahren für eine direkte und unmittelbare Messung der Temperatur an einem sich bewegenden, zeitweise nicht bewegenden oder festen Maschinenbauteil, insbesondere einem Pleuellager und/oder einer Reibpaarung Kolben/Buchse eines Großmotors, mit einem passiven Element zu ermöglichen, welches auch bei einer nicht konstanten Geschwindigkeit der sich bewegenden Teile ein Ergebnis liefert. Dazu ist es ebenso Aufgabe der Erfindung für die Durchführung der Messung eine Kalibrierung der Messanordnung zu ermöglichen.

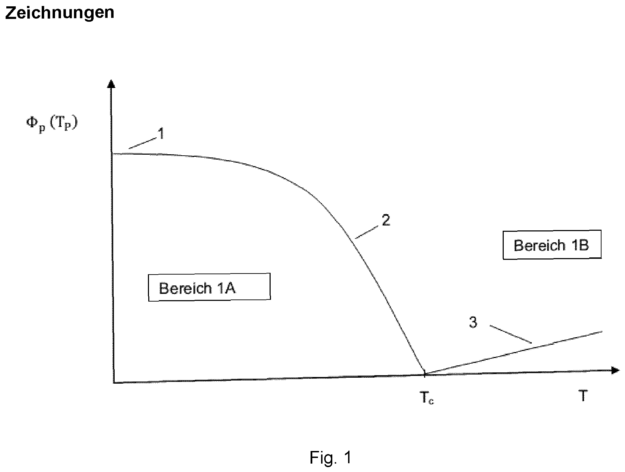

Vorab sollen kurz die physikalischen Zusammenhänge erläutert werden. Fig. 1 zeigt hierzu ein Diagramm für eine prinzipielle Abhängigkeit der magnetischen Eigenschaften eines ferromagnetischen Materials (hier mit Bereich 1A bezeichnet) von der Temperatur T mit einem Phasenübergang zu paramagnetischem Verhalten (hier mit Bereich 1B bezeichnet) bei der Curie Temperatur $T_C$. Die Kurve ist in drei Bereichen gekennzeichnet. Der Bereich 1 mit einer schwachen (fast linearen) Temperaturabhängigkeit gestattet nur eine geringe Temperaturauflösung und erfordert hochauflösende Magnetfeldsensoren. Der Bereich 2 mit einem großen Gradienten $\Delta\Phi_p(T_P(t))/\Delta T$ gestattet eine hohe Temperaturauflösung jedoch bei einer deutlich niedrigeren Magnetfeldstärke, was Magnetfeldsensoren mit einer großen Empfindlichkeit erfordert. Eine Messung im Bereich 3 gestattet eine Temperaturbestimmung nach dem bekannten Curie-Weiss'schen Gesetz bei sehr geringen Magnetfeldstärken.

Für die erfinderische Lösung wird dieses paramagnetische Verhalten ausgenutzt, indem die Magnetfeldstärke des Permanentmagneten gemessen wird. Da sich bekanntermaßen bei einer Temperaturänderung auch die Magnetfeldstärke des Permanentmagneten ändert, ist die erfindungsgemäße Anordnung sowohl für ein sich bewegendes, zeitweise nicht bewegendes oder festes Maschinenbauteil anwendbar. Insbesondere soll die Erfindung in einem Pleuellager sowie an Laufbuchsen zur Überwachung von gleitenden oder rotierenden Maschinenbauteilen angewendet werden.

Für die Lösung der Aufgabe wird ein nicht-induktives Verfahren verwendet, dessen Messsignal im Gegensatz zu induktiven Verfahren nicht von der Änderungsgeschwindigkeit des Magnetfeldes und damit von der Drehfrequenz des Motors abhängt. Insbesondere bei Motoren mit wenigen Zylindern, unregelmäßigen Verbrennungen (durch zündträge oder inhomogene Brennstoffe), Aussetzerbetrieb oder starken Lastsprünge können hierbei Drehungleichförmigkeiten auftreten, die das eigentliche, der Temperatur proportionale Messsignal verfälschen.

Für die Lösung der Aufgabe ist ein mit einem sich bewegenden, zeitweise nicht bewegenden oder festen Maschinenbauteil verbundener Permanentmagnet vorgesehen, welcher in einem bestimmten Bereich fluchtend zu einem Messsystem angeordnet ist. Das Messsystem umfasst einen Sensor zur direkten Messung einer magnetischen Feldstärke, im Folgenden kurz als Sensor bezeichnet. Der Sensor misst die sich ändernde Feldstärke, welche in Abhängigkeit zur Temperatur steht. Das Messsystem wird bei Einbau kalibriert, indem der Abstand zwischen Sensor und Permanentmagneten eingestellt wird und damit für jede Messung konstant ist. Es erfolgt demnach im Gegensatz zum Stand der Technik keine Messung der Induktion.

Die Lösung der Aufgabe erfolgt mit den Merkmalen des Hauptanspruchs und der Nebenansprüche, wobei die Unteransprüche weitere Ausgestaltungen beschreiben.

Die erfindungsgemäße Anordnung zur berührungslosen magnetischen Temperaturmessung an einem sich bewegenden oder zeitweise nicht bewegenden oder festen Maschinenbauteil enthält wenigstens einen, mit dem sich bewegenden, zeitweise nicht bewegenden oder festen Maschinenbauteil verbundenen Permanentmagneten und wenigstens ein dem wenigstens einen Permanentmagneten gegenüberliegendes, einem Gehäuse zugeordnetes Messsystem. Das Messsystem kann direkt in dem Gehäuse oder an dem Gehäuse angeordnet sein. Das Messsystem nimmt Parameter eines magnetischen Feldes des wenigstens einen Permanentmagneten auf, wobei die Parameter eine Funktion der Temperatur des sich bewegenden, zeitweise nicht bewegenden oder festen Maschinenbauteils sind. Das Messsystem ist im Innern des Gehäuses zeitweise oder permanent fluchtend in einer freier Sichtachse zu dem wenigstens einen Permanentmagneten angeordnet und umfasst wenigstens einen Sensor zur direkten Messung einer magnetischen Feldstärke und einen Temperaturfühler. Der wenigstens eine Sensor ist in der Mitte der Rotationsachse des Messsystems und auf der freien Sichtachse längsverschiebbar angeordnet, um einen definierten Abstand zwischen dem wenigstens einen Sensor und dem wenigstens einen Permanentmagneten einzustellen.

In einer Ausgestaltung ist der Temperaturfühler längs der freien Sichtachse allein oder zusammen mit dem Sensor verschiebbar angeordnet.

In einer weiteren Ausgestaltung steht der Temperaturfühler zeitweise in direkten thermischen Kontakt mit der äußeren Oberfläche des sich bewegenden, zeitweise nicht bewegenden oder festen Maschinenbauteils, um sowohl die Temperatur des Messsystems an seiner Einbauposition als auch die Temperatur an der äußeren Oberfläche des sich bewegenden, zeitweise nicht bewegenden oder festen Maschinenbauteils zu bestimmen.

In einer weiteren Ausgestaltung ist der wenigstens eine Permanentmagnet zwischen einer Innenseite des sich bewegenden, zeitweise nicht bewegenden oder festen Maschinenbauteils und einer äußeren Oberfläche des sich bewegenden, zeitweise nicht bewegenden oder festen Maschinenbauteils angeordnet. Dabei steht der wenigstens eine Permanentmagnet zu einem Ölfilm im Innern des sich bewegenden, zeitweise nicht bewegenden oder festen Maschinenbauteils in Kontakt. Der Ölfilm befindet sich beispielsweise zwischen einer Kurbelwelle und der Innenseite eines Pleuels oder zwischen der Lagerschale und dem Kolben einer Laufbuchse.

In einer weiteren Ausgestaltung ist der wenigstens eine Permanentmagnet in einer Aussparung des sich bewegenden, zeitweise nicht bewegenden oder festen Maschinenbauteils derart angeordnet, dass eine Wand mit einer Wandstärke d zur Innenseite des sich bewegenden, zeitweise nicht bewegenden oder festen Maschinenbauteils verbleibt. Es ist sicherzustellen, dass die Temperaturänderung des Ölfilms möglichst zeitnah auf den wenigstens einen Permanentmagneten übertragen wird. Das wird dadurch realisiert, dass die Wanddicke möglichst minimal ausgeführt und die Wand aus einem Material mit einer hohen Wärmeleitfähigkeit ausgebildet wird. Die Wand kann fest oder perforiert sein, wobei eine perforierte Wand einen direkten Kontakt des Ölfilms mit dem Permanentmagneten ermöglicht.

In einer weiteren Ausgestaltung ist der wenigstens eine Permanentmagnet in einer Aussparung des sich bewegenden, zeitweise nicht bewegenden oder festen Maschinenbauteils derart angeordnet, dass die Aussparung mit Luft gefüllt und mit einer Abdeckung aus nicht ferromagnetischem Material verschlossen ist.

In einer weiteren Ausgestaltung ist der wenigstens eine Permanentmagnet in einer Aussparung des sich bewegenden, zeitweise nicht bewegenden oder festen Maschinenbauteils derart angeordnet ist, dass die Aussparung mit einem Gas, beispielsweise einem inerten Gas, oder Vakuum, das eine sehr geringe Wärmeleitfähigkeit und Wärmekapazität aufweist, gefüllt und mit der Abdeckung verschlossen ist.

In einer weiteren Ausgestaltung ist der wenigstens eine Permanentmagnet in einer Aussparung des sich bewegenden, zeitweise nicht bewegenden oder festen Maschinenbauteils derart angeordnet ist, dass die Aussparung mit einer Vergussmasse aus einem nicht magnetisierbaren Material (z.B. Kunststoff) gefüllt ist, welche eine geringe Wärmeleitfähigkeit und Wärmekapazität aufweist.

In einer weiteren Ausgestaltung ist der wenigstens eine Permanentmagnet in einer Aussparung des sich bewegenden, zeitweise nicht bewegenden oder festen Maschinenbauteils derart angeordnet ist, dass die Aussparung mit einer Schraube aus einem nichtferromagnetischen Material gefüllt ist.

In einer weiteren Ausgestaltung sind mehrere Permanentmagnete angeordnet, welche auf der äußeren Oberfläche des sich bewegenden, zeitweise nicht bewegenden oder festen Maschinenbauteils gleichmäßig verteilt angeordnet sind. Dazu sind mehrere, mit dem Gehäuse verbundene Messsysteme entsprechend fluchtend in einer freier Sichtachse zu jeweils einem Permanentmagneten angeordnet. Das ist beispielsweise besonders vorteilhaft bei einem rotierenden Maschinenbauteil, so dass mehrere Messpunkte in regelmäßiger Folge abgefahren werden können.

In einer weiteren Ausgestaltung ist das sich bewegende, zeitweise nicht bewegende oder feste Maschinenbauteil ein Pleuellager mit einer Kurbelwelle und einem Pleuel, oder eine Laufbuchse, oder ein Kreuzkopf, oder ein Kolbenbolzenlager.

In einer weiteren Ausgestaltung ist das Messsystem mit einem Einbauwinkel in dem Gehäuse in der Art angeordnet, dass der Abstand a zwischen dem wenigstens einen Sensor und einem definierten optimalen Punkt, an dessen Position sich der wenigstens eine Permanentmagnet befindet, auf einer Bahnkurve des Pleuels um die Kurbelwelle bestimmt wird.

Das erfindungsgemäße Verfahren zum Kalibrieren einer Anordnung zur berührungslosen magnetischen Temperaturmessung an einem sich bewegenden oder zeitweise nicht bewegenden oder festen Maschinenbauteilwird im Folgenden erläutert. Voraussetzung ist, dass mit dem sich bewegenden, zeitweise nicht bewegenden oder festen Maschinenbauteil wenigstens ein Permanentmagnet und mit einem Gehäuse wenigstens ein Messsystem, welches wenigstens einen Sensor zur direkten Messung einer magnetischen Feldstärke und einen Temperaturfühler umfasst, verbundenen ist. Der wenigstens eine Permanentmagnet steht einerseits zu einem Ölfilm zwischen zwei sich gegeneinander bewegende oder zeitweise nicht bewegende Maschinenbauteile in Kontakt und ist andererseits dem wenigstens einen Messsystem zeitweise oder permanent fluchtend auf einer freien Sichtachse gegenüberliegend angeordnet. Der Kontakt zu einem Ölfilm wird erfindungsgemäß auch dann angesehen, wenn eine feste oder perforierte Wand den Ölfilm von dem Permanentmagneten trennt. Das Messsystem nimmt Parameter eines magnetischen Feldes des wenigstens einen Permanentmagneten auf, wobei die Parameter eine Funktion der Temperatur des sich bewegenden, zeitweise nicht bewegenden oder festen Maschinenbauteils sind. Das Messsystem wird an einer vorgegebenen Position kalibriert, während sich alle Maschinenbauteile in einem thermodynamischen Gleichgewicht befinden. Dazu misst der Temperaturfühler längs der freien Sichtachse auf einer ruhenden Oberfläche des sich bewegenden, zeitweise nicht bewegenden oder festen Maschinenbauteils eine aktuelle Bauteiltemperatur. Gleichzeitig nimmt das Messsystem die Parameter des magnetischen Feldes des wenigstens einen Permanentmagneten erneut auf, sodass durch eine Veränderung eines vorgegebenen Abstands s zwischen Sensor und der Außenseite des sich bewegenden, zeitweise nicht bewegenden oder festen Maschinenbauteils sukzessive Wertepaare $\Phi_p(s_{T=const})$, repräsentiert durch die Sensorspannung U, erzeugt werden, was die Korrelation zwischen den gemessenen Parametern des magnetischen Feldes $\Phi_p$, repräsentiert durch die Sensorspannung U, und der aktuellen Bauteiltemperatur T durch einen Schnitt durch diese Kurvenschar bei dem Abstand s = const. herstellt.

Das erfindungsgemäße Verfahren zur Durchführung einer berührungslosen magnetischen Temperaturmessung an einem sich bewegenden oder zeitweise nicht bewegenden oder festen Maschinenbauteil erfolgt mit einer Anordnung nach einem der Ansprüche 1 bis 12. Dazu ist wenigstens ein Permanentmagnet einerseits zu einem Ölfilm zwischen zwei sich gegeneinander bewegende oder zeitweise nicht bewegende Maschinenbauteile in Kontakt steht und andererseits wenigstens ein Messsystem zeitweise oder permanent fluchtend auf einer freien Sichtachse dem Permanentmagneten gegenüberliegend angeordnet. Das wenigstens eine Messsystem nimmt Parameter eines magnetischen Feldes des wenigstens einen Permanentmagneten auf, wobei die Parameter eine Funktion der Temperatur des sich bewegenden, zeitweise nicht bewegenden oder festen Maschinenbauteils sind. Ein Temperaturfühler des wenigstens einen Messsystems ermittelt längs einer freien Sichtachse auf einer ruhenden Oberfläche des sich bewegenden, zeitweise nicht bewegenden oder festen Maschinenbauteils mehrere Wertepaare einer normalen Betriebstemperatur $(T_{Betr.}^{Norm})$ und leitet diese an eine Signalverarbeitungsbaugruppe weiter, welche eine Aufheiz- und/oder Abkühlungskurve ermittelt. Anschließend wird durch einen Sensor des wenigstens einen Messsystems eine direkte Messung einer magnetischen Feldstärke des wenigstens einen Permanentmagneten ermittelt und an die Signalverarbeitungsbaugruppe weitergegeben. Nach einer Auswertung der gemessenen Wertepaare des Temperaturfühlers und der gemessenen Werte des Sensors in der Signalverarbeitungsbaugruppe erfolgt eine Fehlerkorrektur der Wertepaare, sodass eine absolute Temperaturmessung ermöglicht wird.

Eine direkte berührungslose Messung der Temperaturen unter den im Triebraum vorherrschenden Bedingungen ist derzeit unbekannt.

Eine betriebssichere direkte Messung (ohne Spannungsversorgung) stellt in Kombination mit einer Ölnebeldetektion oder der berührungslosen Messung von repräsentativen Temperaturen an den Laufbuchsen eine sicherheitstechnisch und wirtschaftlich höchst attraktive Variante zum Schutz von Schiff, Maschine und Betriebspersonal dar. Gegenüber der klassischen Methode mit kabelgebundenen Temperatursensoren ist die Wahrscheinlichkeit einer funktionsfähigen Laufbuchsenüberwachung nach Montagearbeiten der Laufbuchse deutlich erhöht.

Allein aus dem Kostenanteil einer planmäßig verbauten Kurbelwelle in Höhe von ca. 15 % des Motorgesamtwertes, der bei einem Schadensfall und der hier notwendigen sofortigen Verfügbarkeit einer Ersatzkurbelwelle (Lieferzeit bis zu 2 Jahre) auch um 100 % höher liegen kann, ergibt sich darüber hinaus ein wirtschaftliches Interesse an einer Zustandsüberwachung des Triebraumes. In vielen Fällen kann so die Reparatur infolge eines Lagerschadens auf den Austausch der betreffenden Schale beschränkt werden, ohne eine aufwändige Nacharbeit des Lagerzapfens (Nachschleifen im montierten Zustand und Übermaßlager, wenn ungehärtete Zapfen und Nacharbeitsreserve vorhanden) oder den Austausch der Kurbelwelle.

Ausführung der Erfindung

Die Erfindung wird anhand eines Ausführungsbeispiels erläutert. Hierzu zeigen

Fig. 1 ein Diagramm zur prinzipielle Temperaturabhängigkeit eines ferromagnetischen Materials mit Phasenübergang zu paramagnetischem Verhalten,

Fig. 2 eine Übersicht einer Anordnung eines passiven und aktiven Teils eines Temperatursensors im Triebraum,

Fig. 3 eine Anordnung eines Sensors zur direkten Messung einer magnetischen Feldstärke im Inneren des Triebraumes,

Fig. 4a eine Anordnung eines Permanentmagneten in einer Aussparung im Pleuellager als Seitenansicht,

Fig. 4b eine Anordnung eines Permanentmagneten in einer Aussparung im Pleuellager als Draufsicht,

Fig. 4c eine Anordnung eines Permanentmagneten im Pleuellager mit dessen tangentialem Abschluss an der Innenseite des Pleuellagers,

Fig. 4d eine Anordnung des Permanentmagneten im Pleuellager mit Schraubverbindung vom Permanentmagneten zur Außenseite des Pleuellagers,

Fig. 5 eine Anordnung mit einem Permanentmagneten in Form einer magnetischen Schraube im Pleuellager,

Fig. 6 eine Anordnung des Permanentmagneten in einer Einkerbung an der Innenseite das Pleuels,

Fig. 7a eine Anordnung des Messsystems an einer Wand eines Kurbelgehäuses mit Kabelverbindung,

Fig. 7b eine Anordnung eines Messsystems an der Wand des Kurbelgehäuses mit Funkverbindung

Fig. 8 eine Anordnung zur berührungslosen magnetischen Temperaturmessung der Buchsentemperatur einer Laufbuchse,

Fig. 9a ein Diagramm, welches eine Annäherung der Pleuellagertemperatur und der Öltemperatur an die Betriebstemperatur zeigt,

Fig. 9b ein Diagramm, welches eine Änderung der Differenz zwischen Pleuellagertemperatur und Öltemperatur zum Zeitpunkt einer Havarie zeigt,

Fig. 9c ein Diagramm, welches einen Verlauf des Gradienten der Pleuellagertemperatur zum Zeitpunkt einer Havarie zeigt,

Fig. 9d ein Diagramm, welches eine Änderung der Differenz zwischen der Pleuellagertemperatur und der vorgegebenen oder berechneten Betriebstemperatur zum Zeitpunkt einer Havarie zeigt,

Fig. 9e ein Diagramm, welches die momentane Temperatur der einzelnen Zylinder und deren arithmetischen Mittelwert zeigt

Fig. 10 eine Schaltungsanordnung für eine Erfassung des Magnetflusses und einer Darstellung der pleuellagertemperaturabhängigen Spannung,

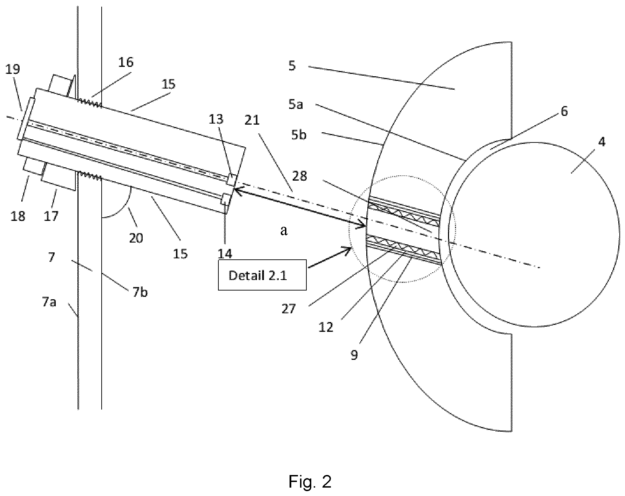

Fig. 2 zeigt in einem ersten Ausführungsbeispiel eine erfindungsgemäße Anordnung für eine berührungslose magnetische Temperaturmessung mit einem passiven und einem aktiven Teil. Das sich bewegende, zeitweise nicht bewegende oder feste Maschinenbauteil ist ein Pleuellager, eine Laufbuchse, Kreuzköpfe oder ein Kolbenbolzenlager. Das Ausführungsbeispiel in Fig. 2 zeigt ein Pleuellager mit einer Kurbelwelle 4 und einem Pleuel 5, wobei sich zwischen Kurbelwelle 4 und Pleuel 5 ein Ölfilm 6 befindet. Das Pleuellager ist in einem Gehäuse 7 (Triebraum) angeordnet, welches eine Außenseite des Gehäuses 7a und eine Innenseite des Gehäuses 7b aufweist. Die Anordnung umfasst ein Messsystem 15 als aktiven Teil und einen Permanentmagneten 8, der in unterschiedlichen Bauformen ausgeführt werden kann; hier in Form einer magnetischen Stiftschraube; als passiven Teil. Das Messsystem 15 besteht u.a. aus einem Sensor 13 zur direkten Messung einer magnetischen Feldstärke, im Folgenden kurz Sensor 13, und aus einem Temperaturfühler 14, welche in einem Gehäuse angeordnet sind. Alternativ kann der Sensor 13 auch eine Induktionsspule sein, was hier aber nicht näher betrachtet werden soll. Desweiteren sind weitere Elemente, wie eine zugehörige Energieversorgung, eine elektrische Beschaltung, eine Signalweiterleitung und eine Auswerteeinheit angeordnet, welche hier auch nicht weiter erläutert werden sollen.

Die Anordnung des Permanentmagneten 8 erfolgt in einer Einkerbung oder Bohrung im Pleuel 5, derart, dass an der Innenseite des Pleuels 5a ein möglichst direkter Kontakt der einen Seite des Permanentmagneten 8 mit dem Ölfilm 6 zwischen der Kurbelwelle 4 und dem Pleuel 5 erfolgt. Der Ölfilm 6 dient einerseits der Schmierung und andererseits als Wärmekopplung zwischen Kurbelwelle 4 und Permanentmagnet 8 wodurch eine Temperaturänderung übertragen wird. Der Permanentmagnet 8 ist mit der anderen Seite so orientiert, dass er mit dem Sensor 13 eine freie Sichtachse 21 bilden kann. Der Einbau des Permanentmagneten 8 in dem Pleuel 5 kann horizontal oder vorzugsweise unter einem Winkel 20 erfolgen. Dieser Winkel 20 kann aus einer dynamischen Lagerberechnung als Ort des engsten Schmierspaltes entnommen werden, wobei hier die höchste mechanische Belastung bei der Bewegung des Pleuels 5 um die Kurbelwelle 4 auftritt. Zur Vermeidung eines magnetischen Kurzschlusses zwischen dem Permanentmagneten 8 und dem (ferromagnetischem) Material des Pleuels 5 wird zwischen beiden eine Hülse aus nichtferromagnetischem Material 27 angeordnet. Zur sicheren Befestigung des Permanentmagneten 8 im Pleuel 5 sind unterschiedliche Anordnungen möglich. Es ist eine Klebung 12 oder Verschraubung oder eine Selbsthaftung des Permanentmagneten 8 möglich. Aussichtsreich ist darüber hinaus eine formschlüssige Einbringung des Magneten in eine Stufenbohrung im Pleuel und dessen Fixierung mit der Lagerschale.

Das aktive Messsystem 15 wird mittels einer Bohrung, die mit einem Gewinde 16 versehen ist, durch die Wand des Gehäuses 7 in den Innenraum des Triebraumes durchgeführt. Die Energieversorgung und Signalweiterleitung erfolgt durch einen Stecker 19. Die Anordnung des Sensors 13 im Innern des Messsystems 15 erfolgt exakt in der Mitte der Rotationsachse des Messsystems 15, so dass bei Drehung des Messsystems 15 in der Bohrung keine Positionsverschiebung des Sensors 13 orthogonal zur Sichtachse 21 erfolgen kann, sondern ausschließlich eine Längsverschiebung entlang der Sichtachse 21.

Ein an den Einbauwinkel 20 angepasster Keil 17 und ein Mutter 18 dienen zum Fixieren des Messsystems 15 in einem definierten Abstand s zwischen Sensor 13 und der Pleueloberfläche 5b auf der Außenseite des Pleuels 5. Über ein Verdrehen (Ein- oder Ausschrauben) des Messsystems 15 in der Bohrung wird das Messsystem 15 entlang der freien Sichtachse 21 verschoben, vorzugsweise so, dass ein möglichst geringer, definierter Abstand a zwischen dem Sensor 13 und einem definierten optimalen Punkt auf der Bahnkurve des Pleuels 5 um die Kurbelwelle 4 herum realisiert wird, an dessen Position sich der Permanentmagnet 8 befindet.

Es wird davon ausgegangen, dass alle Oberflächentemperaturen im Innern des Triebraums während der Vorwärmphase gleich groß sind. Dadurch befindet sich der Temperaturfühler 14 auf einer Temperatur, die nahezu der der Pleueloberfläche 5b entspricht. Das kann eine mechanische Trennung von Sensor 13 und Temperaturfühler 14 und damit einen separat angeordneten Temperaturfühler erfordern. Der Temperaturfühler 14 kann beispielsweise längs zur Sichtachse 21 verschiebbar angeordnet sein und zeitweise in direkten thermischen Kontakt mit der Pleueloberfläche 5b gebracht werden, um sowohl die Temperatur des Messsystems 15 an seiner Einbauposition als auch die Temperatur an der Pleueloberfläche 5b bestimmen zu können.

Vorausgesetzt, dass sich der gesamte Motor in einem thermodynamischen Gleichgewicht befindet (alle Komponenten auf der gleichen Temperatur), kann

1. mittels der Bestimmung einer einzigen Temperatur das Messsystem 15 an seiner Einbauposition kalibriert werden, und
2. die Aufheiz- bzw. Abkühlungskurve des Motors ermittelt werden.

Dadurch stehen mehrere Wertepaare für die Temperatur an der Pleueloberfläche 5b und andere Signale (beispielsweise magn. Feldstärke, Spannung oder Strom) des Messystems 15 zur Verfügung, wodurch eine Fehlerreduktion der kalibrierten Wertepaare bewirkt werden kann.

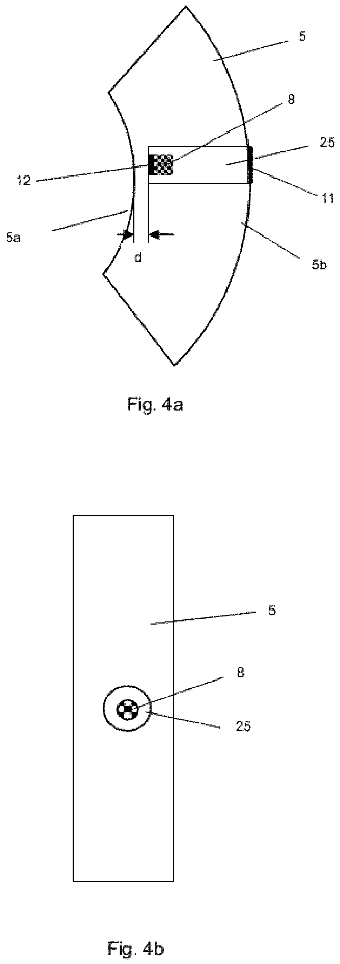

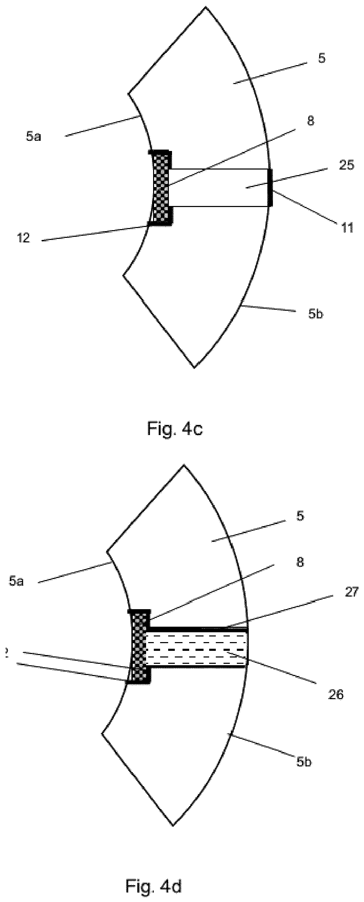

In Kombination mit dem Temperaturfühler 14, ist so ein Kalibrieren des magnetischen Sensors 13 möglich. Der Temperaturfühler 14 misst direkt auf der ruhenden Pleueloberfläche 5b eine aktuelle Bauteiltemperatur, wobei gleichzeitig das Messsystem 15 die Parameter des magnetischen Feldes des Permanentmagneten 8 erneut aufnimmt, sodass durch eine Veränderung des vorgegebenen Abstands s zwischen Sensor 13 und der Außenseite des Pleuellagers 5b sukzessive Wertepaare $\Phi_p(s_{T=const})$ erzeugt werden, um eine Korrelation zwischen den gemessenen Parametern des magnetischen Feldes und dem Abstand s zwischen dem Permanentmagneten 8 bei einer konstanten aktuellen Bauteiltemperatur herzustellen. Somit können nicht nur Temperaturänderungen ermittelt werden, sondern es sind auch absolute Temperaturmessungen möglich. Der Kreis "Detail 2.1" bezeichnet den Teil der Anordnung, der in den folgenden Abbildungen Fig. 4 - Fig. 6 ausgeführt ist.

Die Variation des Abstandes s wird durch ein Verschieben des Messsystems 13 entlang der freien Sichtachse 21 vorgenommen. Das Kalibrieren ist Voraussetzung für die Bestimmung der absoluten Temperatur. Sie ist in zeitlichen Abständen zu wiederholen, um einen zeitlichen Gang und Alterungsprozesse im kombinierten System Messsystem 13 und Permanentmagnet 8 zu kompensieren.

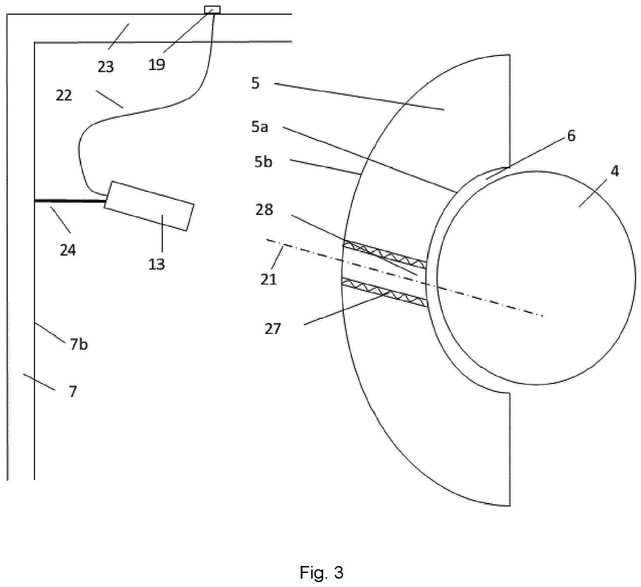

Fig. 3 zeigt in einem weiteren Ausführungsbeispiel eine Anordnung des Sensors 13 zur direkten Messung einer magnetischen Feldstärke im Inneren des Triebraumes, welcher durch das Gehäuse 7 begrenzt wird. Der Sensor 13 ist mit einer Befestigung 24 an der Innenseite 7b des Gehäuses 7 auf der Sichtachse 21 zum Permanentmagneten 8, hier eine magnetische Stiftschraube 28, angebracht. Die magnetische Stiftschraube 28 ist mittels einer nichtferromagnetischen Gewindehülse 27 in dem Pleuel 5 eingebracht. Der Sensor 13 ist weiterhin über eine Kabelverbindung 22 mit einem Stecker 19 auf der Außenseite des Triebraumdeckels 23 verbunden.

In den Fig. 4a bis 4d werden verschiedene Ansichten des Pleuellagers 5b mit verschiedenen Möglichkeiten der Anordnung des Permanentmagneten 8 gezeigt. Fig. 4a zeigt hierzu die Seitenansicht und Fig. 4b die Draufsicht des Pleuels 5 mit der Innenseite des Pleuellagers 5a und der Außenseite des Pleuellagers 5b in dem der Permanentmagnet 8 mittels einer Klebung 12 in einer Aussparung 25 angeordnet ist, wobei im Pleuellager 5 keine durchgehende Bohrung ist sondern eine Wand zur Innenseite des Pleuels 5a stehen bleibt. Die Wandstärke d dieses Abschnittes des Pleuellagers 5 an der Stelle der Fixierung des Permanentmagneten 8 wird sehr klein gewählt, damit ein guter Wärmeübergang besteht und dementsprechend eine genaue und schnelle Messung gegeben ist. Zu den anderen Begrenzungsflächen der Aussparung 25 soll der Permanentmagnet 8 keinen direkten Kontakt aufweisen, damit keine Wärmeübertragung zu weiteren Teilen des Pleuels 5 erfolgt. Desweiteren wird ein magnetischer Kurzschluss verhindert. In einer ersten Ausführung wird die Aussparung 25 der Atmosphäre des Triebraumes ausgesetzt.

In einer weiteren Ausführung wird die Aussparung 25 mit Luft gefüllt und mit einer Abdeckung 11 aus nicht ferromagnetischem Material verschlossen. Durch die Abdeckung 11 wird verhindert, dass das Öl und ferromagnetischer Abrieb aus dem Gehäuse 7 in die Aussparung 25 gelangen und dementsprechend eine Verringerung der Messgenauigkeit bewirken kann.

In einer anderen Ausführung wird die Aussparung 25 mit einem Gas oder Vakuum, das eine sehr geringe Wärmeleitfähigkeit und Wärmekapazität aufweist, gefüllt und mit der Abdeckung 11 verschlossen. Damit wird eine weitere Verbesserung der Messgenauigkeit gegenüber der Ausführung ohne Abdeckung 11 sowie mit Luftfüllung und Abdeckung 11 erzielt.

In einer Ausführung erfolgt die Ausfüllung der Aussparung 25 nur mit einer Vergussmasse, die eine geringe Wärmeleitfähigkeit und Wärmekapazität aufweist (z. B. Epoxidharz). Hier wird der Abdeckung 11 nicht benötigt. Diese Ausführung ist ähnlich vorteilhaft wie die mit der Ausfüllung der Aussparung 25 mit Gas oder Vakuum.

In einer weiteren Ausführung erfolgt die Ausfüllung der Aussparung 25 mit einer Schraube, die aus einem nichtferromagnetischen Material besteht und auch eine geringe Wärmeleitfähigkeit und Wärmekapazität aufweist (z.B. Kunststoff). Dazu muss jedoch in die Aussparung 25 ein Gewinde geschnitten werden. Eine weitere Ausführung sieht einen Verschluss der Aussparung 25 mittels eines Stopfens vor.

In Fig. 4c ist der Permanentmagnet 8 tangential an der Innenseite des Pleuellagers 5a angeordnet. Befestigt wird der Permanentmagnet 8 mittels einer Klebung 11. Durch den direkten Kontakt des Permanentmagneten 8 mit der Innenseite des Pleuellagers 5a wird eine genauere und schnellere Messung der Temperatur erwartet als nach der Anordnung aus Fig. 4a und Fig. 4b. Der Permanentmagnet 8 kann auch an die Krümmung des Pleuellagers 5 angepasst werden. Diese Anordnung gestattet dann eine Vermeidung des Spaltes, der bei einer tangentialen Anordnung naturgemäß auftritt.

In Fig. 4d wird die Aussparung 25, die in Fig. 4c dargestellt ist, mittels einer Stiftschraube aus ferromagnetischem Material 26 ausgefüllt, die ohne Luftspalt mit dem Permanentmagneten verbunden ist. Dieses ist auch in gleicher Weise mit der Anordnung aus Fig. 4a und 4b möglich. Das Magnetfeld des Permanentmagneten 8 wird über die Stiftschraube aus ferromagnetischem Material 26 wesentlich stärker an der Außenseite des Pleuellagers 5b in Erscheinung treten als über ein nichtferromagnetisches Medium in der Aussparung 25 wie in Fig. 4a, 4b und 4c. Damit kein magnetischer Kurzschluss auftritt, muss eine nichtferromagnetische Gewindehülse 27 für das Einschrauben der Stiftschraube 26 aus ferromagnetischem Material in die Aussparung 25 integriert werden. Ein weiterer Vorteil hinsichtlich der Temperaturmessung ergibt sich, wenn die nichtferromagnetische Gewindehülse 27 eine geringe Wärmeleitfähigkeit und Wärmekapazität aufweist. Dies kann beispielsweise durch Kunststoffgewindehülsen erreicht werden. Werden Schrauben mit Köpfen eingesetzt, so müssen nicht ferromagnetische Unterlegscheiben verwendet werden, um auch hier einen magnetischen Kurzschluss zu verhindern.

In einer Ausführung hierzu kann auch die Stiftschraube 26 aus ferromagnetischem Material durch einen Stift aus ferromagnetischem Material ersetzt werden, der in der Aussparung 25 mittels eines nichtferromagnetischen Vergusses so fixiert wird, dass keine Berührung mit dem Pleuel 5 auftritt.

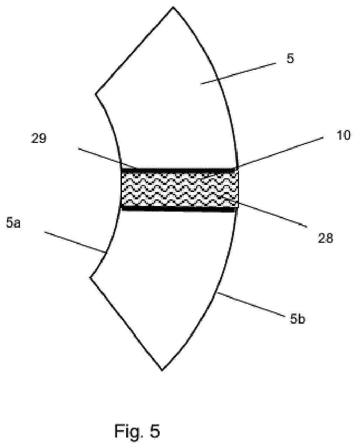

Fig. 5 zeigt eine Anordnung mit einem Permanentmagneten 8 in Form einer magnetischen Stiftschraube 28. Auch hier wird das Magnetfeld der magnetischen Stiftschraube 28 wesentlich stärker an der Außenseite des Pleuellagers 5b in Erscheinung treten als das eines Permanentmagneten 8 über ein nichtferromagnetisches Medium in der Aussparung 25 wie in Fig. 4a, 4b und 4c.

Zu Vermeidung eines magnetischen Kurzschlusses müssen in der durchgehenden Bohrung 10 eine durchgehende nichtferromagnetische Gewindehülse 29 eingesetzt werden. Auch hier ergibt sich wieder ein Vorteil hinsichtlich der Temperaturmessung, wenn die durchgehende nichtferromagnetische Gewindehülse 29 eine geringe Wärmeleitfähigkeit und Wärmekapazität aufweist.

In einer weiteren Ausführung hierzu kann auch die magnetische Stiftschraube 28 durch einen magnetischen Stift ersetzt werden, der in der Bohrung 10 durch das Pleuel 5 mittels eines nichtferromagnetischen Vergusses so fixiert wird, dass keine Berührung mit dem Pleuel 5 auftritt.

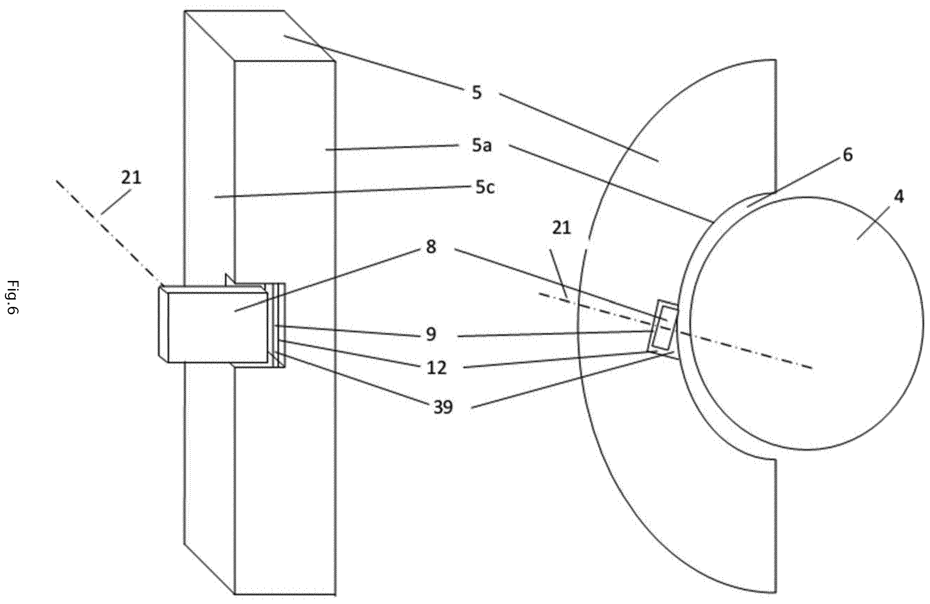

Fig. 6 zeigt die Anordnung mit einer Einkerbung 39 an der Innenseite 5a des Pleuels 5. (Fig. 6a ist die perspektivische Sicht auf die Seitenfläche 5c und die Innenseite 5a des Pleuels 5. Fig. 6b ist eine Seitenansicht) Der Permanentmagnet 8 wird in der seitlichen Einkerbung 39 mittels Klebung 12 befestigt oder in einer weiteren Ausführung auf andere Art und Weise fixiert. Die Klebung 12 kann gleichzeitig als magnetische Isolation 9 ausgeführt werden, wobei die Isolation 9 auch als gesonderte Schicht ausgeführt sein kann. Der Permanentmagnet 8 ist so in der seitlichen Einkerbung 39 fixiert, dass er über die Seitenfläche des Pleuels 5c hinausragt. Die freie Sichtachse 21 zwischen dem Permanentmagneten 8 und dem Messsystem 15 ist seitlich am Pleuel 5 vorbeigeführt.

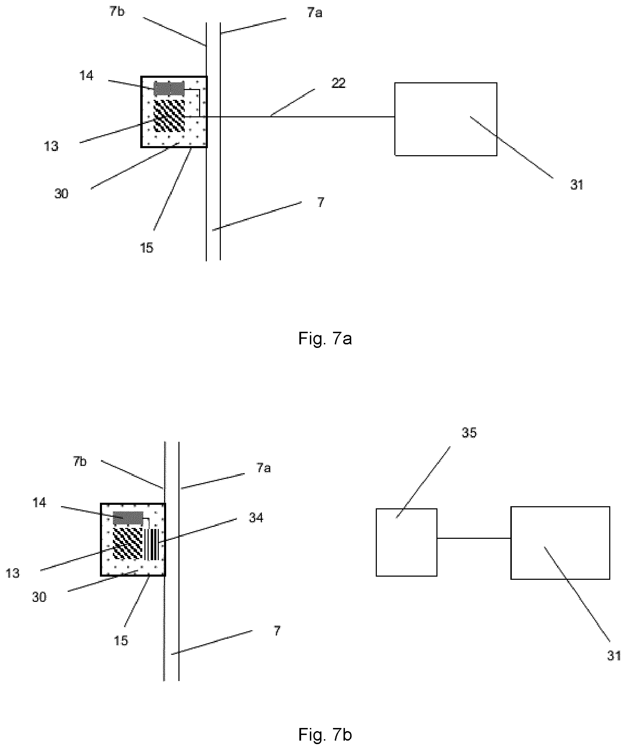

Fig. 7a zeigt die Anordnung des Messsystems 15 an der Innenwandseite des Gehäuses 7b des Triebraums. Zum Schutz gegenüber Öl und Öldämpfen ist das Messsystem 15 mit einer Versiegelung 30 (z. B. Epoxidharz) versehen. Der Sensor 13 des Messsystems 15 detektiert den Magnetfluss $\Phi_P$ des Permanentmagneten 8 oder der magnetischen Stiftschraube 28. Von dem Messsystem 15 mit dem Temperaturfühler 14, der die Triebraumtemperatur $T_B$ (t) ermittelt, geht eine Kabelverbindung 22 durch den Triebraum zu einer Signalverarbeitungsbaugruppe 31. Diese Kabelverbindung 22 dient auch zur Stromversorgung der Baugruppe des Sensors 13 und des Temperaturfühlers 14.

In einer Ausführung hierzu kann auch das Messsystem 15 an der Außenwandseite 7a des Gehäuses 7 des Triebraumes angeordnet werden. Der Vorteil besteht hier gegenüber der Anordnung an der Innenseite 7b des Gehäuses 7 dahingehend, dass das Messsystem 15 sich dann in einer günstigen Umgebung (niedrige Temperatur, kein Ölnebel) befindet.

In Fig. 7b ist die Anordnung aus Fig. 7a mittels eines Funksenders 34 erweitert worden. Das Signal des Sensors 13 und des Temperaturfühlers 14 wird mittels des Funksenders 34 an den Funkempfänger 35 gesendet und von dort an die Signalverarbeitungsbaugruppe 31 weitergeleitet. Die Kabelverbindung 22 kann entfallen. Die Stromversorgung des Sensors 13, des Temperaturfühlers 14 und des Funksenders 34 erfolgt mittels Batterien oder induktiver Übertragung von Elektroenergie. Auch hier kann in einer weiteren Ausführung der Sensor 13, der Temperaturfühler 14 und der Funksender 34 in einer Baugruppe an der Außenseite 7a des Gehäuses 7 des Triebraumes angeordnet werden.

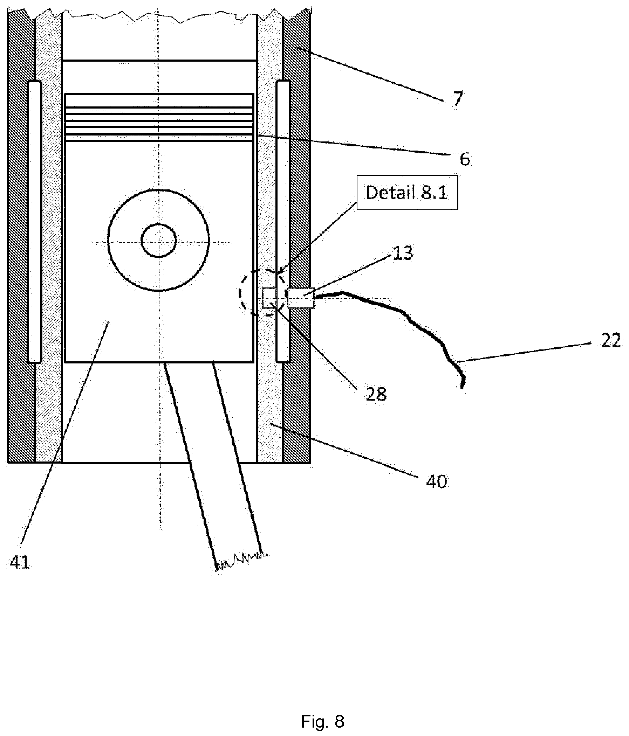

Fig. 8 zeigt eine Anordnung zur berührungslosen magnetischen Temperaturmessung der Buchsentemperatur einer Laufbuchse 40 eines Hubkolbenmotors. Gezeigt wird eine prinzipielle Anordnung des passiven Teils - Permanentmagnet 8 - und aktiven Teils - Messsystem 15 mit dem Sensor 13 zur direkten Messung einer magnetischen Feldstärke - zur Messung der Temperatur an der zylindrischen Laufbuchse 40. Über entsprechende Aussparungen werden in diesem Ausführungsbeispiel magnetische Stiftschrauben 28 in die äußere Oberfläche der Laufbuchse 40 eingebracht, so dass die Lauffläche der Buchse unverändert bleibt. Die magnetischen Stiftschrauben 28 schließen auf der Außenseite bündig mit der Oberfläche ab oder sind zurückversetzt, sodass die Demontage der Laufbuchse 40 weiterhin möglich bleibt. Die magnetischen Stiftschrauben 28 können je nach konstruktiven Gegebenheiten des Motorgehäuses ggf. mehrfach um z.B. 4 x 90 ° versetzt angeordnet werden. Zu jedem passiven Sensorteil ist ein aktiver Empfänger eingesetzt. Dieser ist entweder in die Laufbuchsenaufnahme des Motorgestelles integriert oder über eine Bohrung im Gehäuse 7 so angeordnet, dass die jeweilige magnetische Stiftschraube 28 zu dem Sensor 13 in einer Ebene liegt. Vorzugweise werden als Messstellen nicht die Laufbuchsentemperaturen auf der Höhe des oberen Totpunktes (OT) des 1. Kompressionsringes, sondern deutlich tiefer im Bereich des Kolbenhemdes angeordnet. Bevorzugt ist hier eine Stelle 90° zur Achse der Kurbelwelle auf der Druckseite der Laufbuchse 40 zu überwachen. Wenn konstruktiv möglich, können ggf. mehrere weitere Sensoren um jeweils 45° versetzt in derselben Höhe integriert werden, um Anreiber durch übermäßige Ausdehnungen des Kolbens 41 schneller zu detektieren. Ziel soll es hier sein, Anreiber des Kolbens 41 an der Laufbuchse 40 aufgrund des hierdurch verursachten Temperaturanstieges zu detektieren und damit SplashOil-Überwachungen der Laufbuchse 40 vollständig zu ersetzen. Ein Ölfilm zwischen der Laufbuchse 40 und dem Kolben 41 dient auch hier einerseits der Schmierung und andererseits als Wärmekopplung, wodurch eine Temperaturänderung an den Permanentmagneten 8 übertragen wird. In dem hervorgehobenen Detail 8.1 wird die Einbringung des Permanentmagneten 8 in die Laufbuchse 40 dargestellt und kann analog zu den Montagemöglichen im Pleuel erfolgen.

Für das Verfahren zur berührungslosen magnetischen Temperaturmessung an einem sich bewegenden, zeitweise nicht bewegenden oder festen Maschinenbauteil sind die folgenden Betrachtungen von Bedeutung.

Das übergeordnete Ziel ist eine robuste berührungslose direkte Erfassung von Temperaturen an Bauteilen in Kolbenmaschinen (Motoren, Pumpen, Expander und Kompressoren), die entweder im Betrieb bewegt sind oder aber deren Verkabelung mit Signalleitung Montagearbeiten behindern bzw. durch diese Arbeiten zerstört werden können.

Ersetzt werden sollen hier vornehmlich indirekte Messverfahren, die die zu erfassende Bauteiltemperatur durch eine Messung der Temperaturen von eingesetzten und/oder umgebenden Betriebsmedien (z.B. Schmieröl, Luft im Spalte zwischen Laufbuchse und Gestell) approximieren.

Hierbei soll bewusst auf die aktive, auf eine Spannungsversorgung angewiesene Sensorik an den im Betrieb oder während der Montage bewegten Maschinenbauteilen verzichtet werden. Einer zuverlässigen und langlebigen passiven Sensorik, die mit einem Minimum an Wartungsarbeiten auskommt sowie nachrüstbar ist, wird hierbei angestrebt.

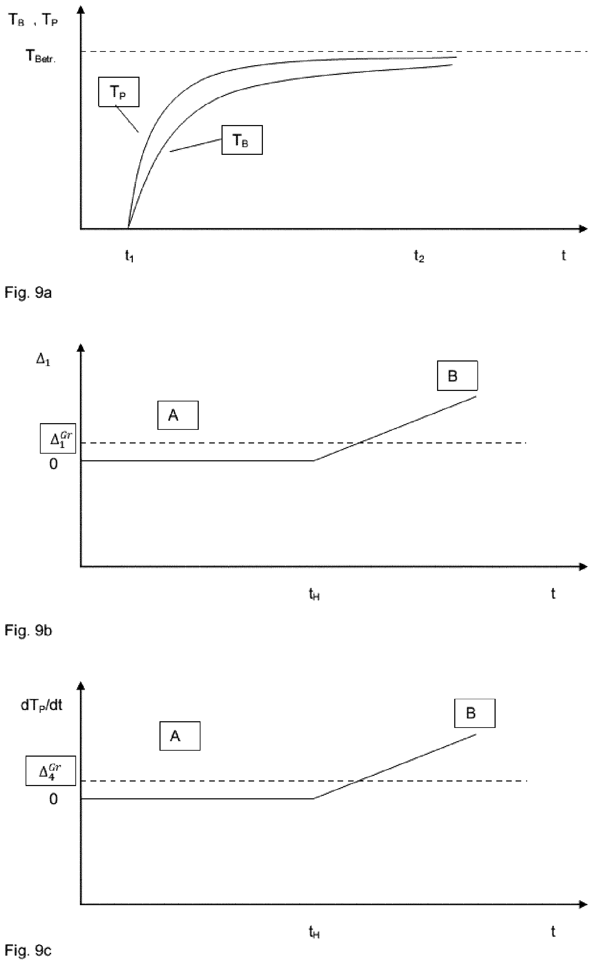

Fig. 9a zeigt die Temperaturverläufe der Öltemperatur $T_B$ und der Pleuellagertemperatur $T_P$ nach der Inbetriebnahme des Motors zum Zeitpunkt $t_1$. Zu einem späteren Zeitpunkt $t_2$ wird die Betriebstemperatur $T_{Betr.}$ des normalen Betriebszustandes (normale Betriebstemperatur $T_{Betr.}^{Norm}$) erreicht. Eine Havarie kann durch einen starken plötzlichen oder langsamen aber kontinuierlichen Anstieg der Pleuellagertemperatur $T_P(t)$ ausgelöst werden.

In Fig. 9b ist die Differenz $\Delta_1 = T_P - T_B$ zwischen der Öltemperatur $T_B$ und der Pleuellagertemperatur $T_P$ dargestellt. Der normale Betriebszustand A ist durch eine sehr kleine (positive) Differenz $\Delta$ gekennzeichnet. Zum Zeitpunkt $t_H$ einer Havarie kann die Öltemperatur $T_B$ aufgrund der Wärmekapazität des Öls der schnellen Änderung der Pleuellagertemperatur $T_P$ nicht folgen und es kann zur Überschreitung der zuvor festgelegten maximalen Abweichung $Gr_1$ kommen. Der Betriebszustand B beschreibt diese Havariesituation.

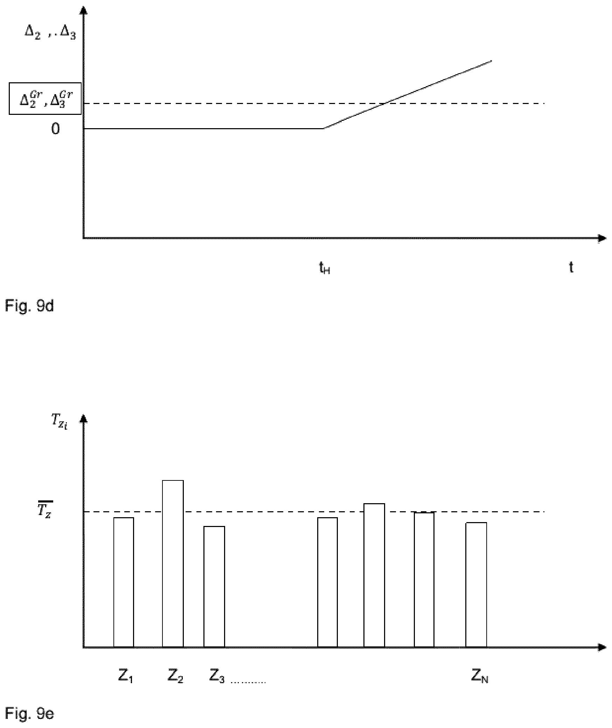

Die Fig. 9c bestimmt das Überschreiten einer vorgegebenen Änderungsgeschwindigkeit $Gr_4$ der Temperatur allein aus der zeitlichen Abfolge des Temperaturverlaufes von der Pleuellagertemperatur $T_P(t)$. Zu diesem Zweck wird zu jedem Zeitpunkt der Gradient $\frac{dT_P(t)}{dt}$ gebildet. Ist der Temperaturanstieg der Pleuellagertemperatur $T_P(t)$ jedoch langsam aber kontinuierlich, so ist es aufgrund der Wärmeleitung möglich, dass die Differenz $\Delta_i$ oder der Gradient $\frac{dT_P(t)}{dt}$ die vorher festgelegte maximale Abweichung $Gr_i$ nicht überschreitet, obwohl die momentane Betriebstemperatur $T_{Betr.}$ bereits überschritten ist. Zum Erkennen dieser Situation ist in Fig. 9d die Differenz $\Delta_2 = T_P - T_{Betr.}^{Norm}$ dargestellt. Die normale Betriebstemperatur $T_{Betr.}^{Norm}$ ist ein fester vorgegebener Wert. Für die Überschreitung der Differenz $\Delta_2$ wird hier die maximale Abweichung $Gr_2$ eingeführt. Alternativ zu der festen Vorgabe kann ein gleitender Mittelwert der Betriebstemperatur $\overline{T_{Betr.}} = \frac{1}{N} \times \sum_{i=1}^{N} T_P(t_i),$ aus der zeitlichen Abfolge der Pleuellagertemperatur $T_P(t)$ berechnet werden. Damit ergibt sich dann die Differenz $\Delta_3 = T_P - T_{Betr.}$. Für die Überschreitung der Differenz $\Delta_3$ wird hier die maximale Abweichung $\frac{Gr}{3}$ eingeführt.

Die Fig. 9e zeigt die momentane Temperatur $T_{z_i}$ an den Lagerschalen bzw. der Laufbuchse des i-ten Zylinders sowie den arithmetischen Mittelwert über alle Zylinder. Voneinander abweichende Temperaturen $T_{z_i}$ deuten auf eine ungleichmäßige Beanspruchung der Lager bzw. der Laufbuchse der einzelnen Zylinder hin, wie sie bei ordnungsgemäßem Betrieb der Maschine nicht vorkommen sollte. Damit wird hier ein Kennwert für beginnende Lagerschäden bzw. Buchsenanreiber als Mittelwertabweichung bzw. Min/Max-Unterschied generiert, der zur Triebraumüberwachung herangezogen werden kann.

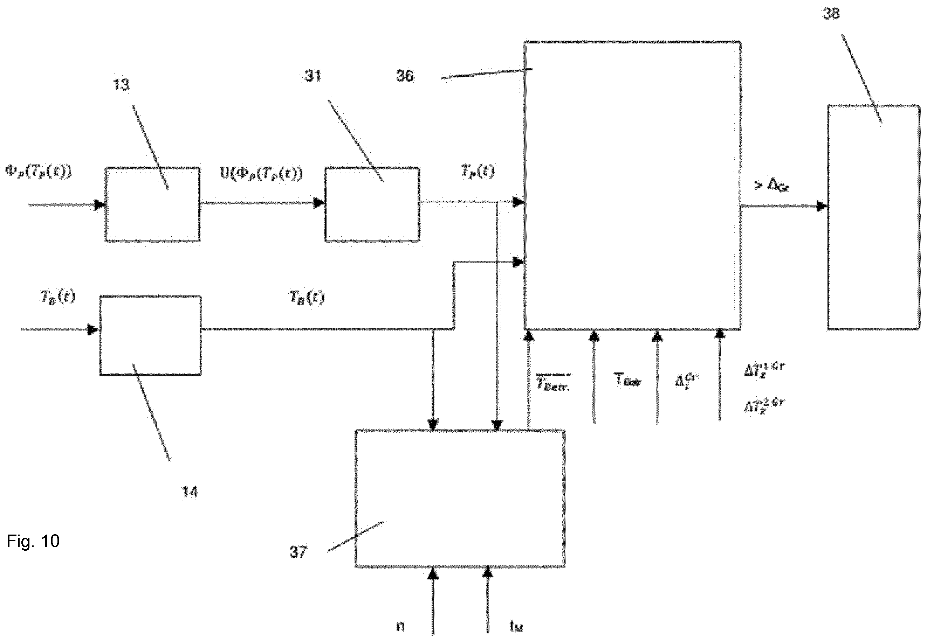

Fig. 10 zeigt eine Schaltungsanordnung für die Erfassung des Magnetflusses $\Phi_P$ mit der Darstellung des zeitlichen Verlaufs der von der Pleuellagertemperatur $T_P(t)$ abhängigen Spannung $U(T_P(t))$ mittels des Sensors 13 und der Signalverarbeitungsbaugruppe 31 und die Erfassung des zeitlichen Verlaufs der Öltemperatur $T_B(t)$ mit der Darstellung der von der Öltemperatur $T_B(t)$ mittels des Temperaturfühlers 14 sowie der Bewertung dieser Temperaturverläufe mittels der Bewertungsbaugruppe 36, der Speichbaugruppe 37 und die Übergabe der Grenzwertinformation an die übergeordnete Steuereinheit 38. In der Darstellung wird mit Temperaturen gearbeitet, in der technischen Realisierung ist mit den Spannungsäquivalenten zu arbeiten. Der vom Permanentmagneten 8 oder der magnetischen Stiftschraube 28 ausgehende Magnetfluss $\Phi_P$ wird mittels des Sensors 13 detektiert und in eine Spannung U konvertiert. In der Signalverarbeitungsbaugruppe 31 wird mittels einer Kalibrierungsfunktion aus der Spannung U der zeitliche Verlauf der Pleuellagertemperatur $T_P(t)$ bestimmt und an die Bewertungsbaugruppe 36 und die Speicherbaugruppe 37 übertragen. Der zeitliche Verlauf der Öltemperatur $T_B(t)$ wird vom Temperaturfühler 14 erfasst und an die Bewertungsbaugruppe 36 und die Speicherbaugruppe 37 übertragen. Desweiteren werden der Bewertungsbaugruppe die Temperatur im normalen Betriebszustand $T_{Betr.}^{Norm}$ und die maximal zulässigen Temperaturdifferenzen $\frac{Gr}{i}$ bereitgestellt. In der Speichereinheit 37 werden alle relevanten Zeitreihen der Pleuellagertemperatur $T_P(t)$ und der Öltemperatur $T_B(t)$ revolvierend oder permanent abgelegt. Sie dienen unter anderem zur Berechnung der Betriebstemperatur $T_{Betr.}$ als Mittelwert der Pleuellagertemperatur $T_p$ über einen vorzugebenden Zeitraum $t_M$. Der Mittelwert ergibt sich zu $\overline{T_{Betr.}} = \frac{1}{N} \times \sum_{i=1}^{N} T_P(t_i),$ wobei sich N aus dem gewünschten Zeitraum $t_M$ und der momentanen Drehzahl n des Motors bestimmt. Die momentane Drehzahl n wird extern gemessen und zur Speicherbaugruppe 37 übertragen. Der gewünschte Zeitraum zur Mittelwertbildung ist extern der Speichergruppe 37 vorzugeben $(\overline{T_{Betr.}} = \frac{1}{N} \times \sum_{i=1}^{N} T_P(t_i).$ Der berechnete Mittelwert wird zur weiteren Verwendung an die Bewertungsbaugruppe 36 übergeben. Darüber hinaus stehen die Daten für weitere statistische Auswertungen zu Verfügung. Die zeitlichen Temperaturverläufe sind so abzulegen, dass im Fall einer Havarie diese unverfälscht zur Verfügung stehen.

In der Bewertungsbaugruppe 36 werden die Differenzen

$$\Delta_1 = T_P - T_B$$

$$\Delta_2 = T_P - T_{Betr.}^{Norm}$$

$$\Delta_3 = T_P - \overline{T_{Betr.}}$$

$$T_Z^1 = max(T_{z_i}) \quad \overline{T_Z}.$$

$$T_Z^2 = max(T_{z_i}) \quad min(T_{z_i}).$$

und der Gradient

$$\frac{dT_P(t)}{dt}$$

gebildet.

Zur Bewertung bzw. als Grenzwertabgleich in der Bewertungsbaugruppe 36 werden zur Einleitung weiterer Maßnahmen verwendet:

a. Ein Grenzwertvergleich mit der ermittelten Temperatur (=Absolutabfrage)
b. Der zeitliche Anstieg dieser Temperatur (= Relativabfrage).
c. Die maximale Abweichung zum Mittelwert aller Zylinder und/oder die Maximaldifferenz zwischen allen Zylindern. (= Zylinderabgleich).
d. Die maximale Änderungsgeschwindigkeit der Temperatur (= Gradientenabgleich)

Die Grenzwertvergleiche sind sowohl für den Triebraum als auch für die Laufbuchse permanent und getrennt voneinander vorzunehmen.

Die entsprechenden Grenzwerte werden im Prüfstandsversuch ermittelt. Sie werden für den Triebraum und die Laufbuchse gesondert ermittelt. Die Reaktion auf entsprechende Grenzwertüberschreitungen als Kompetenz des Motorenherstellers ist nicht Gegenstand dieser Erfindung.

Wird eine Überschreitung eines der vorgegebenen Grenzwerte $\overset{Gr}{i}$ festgestellt, so erfolgt eine Meldung des Signals > $\Delta_{Gr}$ an die übergeordnete Steuereinheit 38. Die vorgegebenen Grenzwerte $\overset{Gr}{i}$ können bezüglich der in Fig. 9b, c und d dargestellten Differenzen und des Gradienten unterschiedlich sein. Das bewirkt das Einleiten von Notfallmaßnahmen.

Als Kriterium für ein fehlerhaftes Verhalten dient entweder wie beschrieben die Abweichung der momentanen Temperatur $T_{z_i}$, des i-ten Zylinders vom gemeinsamen Mittelwert $\overline{T_z}$ ( $T_z^1$) oder die maximal vorliegende Differenz $T_z^2$ zwischen allen i Zylindern. Wird ein zuvor festgelegter zulässiger Grenzwert ( $T_z^{1Gr}$ und/oder $T_z^{2Gr}$ ) überschritten, so ist eine mögliche und allgemein übliche Reaktionsstrategie die Maßnahmenreihenfolge 0) Alarmmeldung, 1) Leistungsreduktion, 2) Lastabwurf und 3) Notstopp erforderlich. Eine alleinige Abschaltung des betroffenen Zylinders Zi wäre aufgrund der hierdurch zu erwartenden Drehschwingungen im Triebwerk sowie der gesamten angeschlossenen Wellenleitung nicht ratsam.

Bezugszeichen

1 Bereich geringer Temperaturabhängigkeit der magnetischen Eigenschaften im ferromagnetischen Bereich
2 Bereich starker nichtlinearer Temperaturabhängigkeit der magnetischen Eigenschaften im ferromagnetischen Bereich
3 Bereich geringer Temperaturabhängigkeit der magnetischen Eigenschaften im paramagnetischen Bereich
4 Kurbelwelle
5 Pleuel
5 a Innenseite des Pleuels
5 b Pleueloberfläche (Außenseite des Pleuels)
6 Ölfilm
7 Gehäuse (Gestell)
7a Außenseite, Außenwandseite des Gehäuses
7b Innenseite, Innenwandseite des Gehäuses
8 Permanentmagnet (passiver Teil des Temperatursensors)
9 magnetische Isolation
10 Bohrung durch das Pleuel
11 Abdeckung
12 Klebung
13 Sensor zur direkten Messung einer magnetischen Feldstärke
14 Temperaturfühler (Thermoelement, Pt100, PT1000....)
15 Messsystem
16 Gewinde
17 Keilförmige Dichtung
18 Mutter
19 Stecker
20 Einbauwinkel
21 Sichtachse
22 Kabelverbindung
23 Triebraumdeckel
24 Befestigung des aktiven Teils des Temperatursensors an der Innenseite 7b des Gehäuses 7
25 Aussparung (nicht durchgehende Bohrung)
26 Stiftschraube aus ferromagnetischem Material
27 Nichtferromagnetische Gewindehülse
28 Magnetische Stiftschraube
29 Durchgehende nichtferromagnetische Gewindehülse
30 Versiegelung
31 Signalverarbeitungsbaugruppe
34 Funksender
35 Funkempfänger
36 Bewertungsbaugruppe
37 Speicherbaugruppe
38 Übergeordnete Steuereinheit
39 seitliche Einkerbung
40 Laufbuchse
41 Kolben
42 Lagerschale

d Wandstärke des Abschnittes des Pleuellagers 5 an der Stelle der Fixierung des Permanentmagneten 8
s Abstand zwischen Sensor 13 und der Außenseite des Pleuellagers 5b
a definierter Abstand zwischen Sensor 13 und Permanentmagneten 8, 28
$T_B(t)$ Öltemperatur mit Temperaturfühler 14 ermittelt
$T_P(t)$ Pleuellagertemperatur mit Baugruppe Magnetfeldsensor 13 ermittelt
$T_c$ Curie-Temperatur
$T_{Betr.}$ Betriebstemperatur

$T_{Betr.}^{Norm}$ Temperatur im normalen Betriebszustand

$T_{Betr}$ Mittelwert der Betriebstemperatur berechnet aus den gemessenen Einzelwerten $T_P(t)$

t Zeit

$t_H$ Zeitpunkt der Havarie

$t_M$ gewünschte Zeit zur Berechnung des gleitenden Mittelwertes $T_{Betr}$.

$\Phi_p(T_p(t))$ Magnetfluss

U Ausgangsspannung der Baugruppe Magnetfeldsensor

U) Von der Pleuellagertemperatur $T_P(t)$ abhängige Spannung

U) Von der Öltemperatur $T_B(t)$ abhängige Spannung

1 Differenz $T_P(t)$ $T_B(t)$

$\overset{Gr}{1}$ vorgegebene maximal zulässige Temperaturdifferenz zwischen aktueller Pleuellagertemperatur und $T_p$ und aktueller Öltemperatur $T_B$

$\Delta_2$ Differenz $T_P - T_{Betr.}^{Norm}$

$\overset{Gr}{2}$ vorgegebene maximal zulässige Temperaturdifferenz zwischen aktueller Pleuellagertemperatur und $T_p$ und vorgegeben Temperatur $T_{Betr.}^{Norm}$

$\Delta_3$ Differenz Tp - $T_{Betr}$.

$\overset{Gr}{3}$ vorgegebene maximal zulässige Temperaturdifferenz zwischen aktueller Pleuellagertemperatur $T_p(t)$ und dem Mittelwert der Betriebstemperatur berechnet aus den gemessenen Einzelwerten $T_{Betr}$.

n Drehzahl des Motors

$\frac{dT_P(t)}{dt}$ Gradient

$\overset{Gr}{4}$ vorgegebene maximale Änderungsgeschwindigkeit der Pleuellagertemperatur

> $\Delta_{Gr}$ Grenzwertsignal

Zi i-ter Zylinder

$\overline{T_Z} = \frac{1}{N}\sum_{i=1}^{N} T_{Z_i}$ mittlere Temperatur aller N Zylinder

$T_{Z_i}$ Temperatur des i-ten Zylinders

$T_Z^1 = max(T_{Z_i})$ $\overline{T_Z}$ maximale Abweichung der Temperatur eines Zylinders i vom Mittelwert $T_z$

$T_Z^2 = max(T_{Z_i})$ $min(T_{Z_i})$ maximale Temperaturdifferenz zwischen den Zylindern

$T_Z^{1Gr}$ zulässige maximale Temperaturabweichung eines Zylinders i vom Mittelwert $T_z$

$T_Z^{2Gr}$ zulässige maximale Temperaturabweichung zwischen dem Zylinder mit der maximalen und minimalen Temperatur

$\Phi_p(s_{T=const})$ Graph der Wertepaare $\Phi_p$ $s$

## Patentansprüche

1. Anordnung zur berührungslosen magnetischen Temperaturmessung an einem sich bewegenden oder zeitweise nicht bewegenden oder festen Maschinenbauteil,

   - wobei die Anordnung wenigstens einen, mit dem sich bewegenden, zeitweise nicht bewegenden oder festen Maschinenbauteil verbundenen Permanentmagneten (8, 28) und wenigstens ein dem wenigstens einen Permanentmagneten (8, 28) gegenüberliegendes, zu einem Gehäuse (7) zugeordnetes Messsystem (15) enthält,
   - wobei das Messsystem (15) Parameter eines magnetischen Feldes des wenigstens einen Permanentmagneten (8, 28) aufnimmt,
   - wobei die Parameter eine Funktion der Temperatur des sich bewegenden, zeitweise nicht bewegenden oder festen Maschinenbauteils sind,

   **dadurch gekennzeichnet, dass**

   - das Messsystem (15) in dem Gehäuse (7) oder an dem Gehäuses (7) zeitweise oder permanent fluchtend in einer freier Sichtachse (21) zu dem wenigstens einen Permanentmagneten (8, 28) angeordnet ist und wenigstens einen Sensor (13) zur direkten Messung einer magnetischen Feldstärke und einen Temperaturfühler (14) umfasst,
   - wobei der wenigstens eine Sensor (13) in der Mitte einer Rotationsachse des Messsystems (15) und auf der freien Sichtachse (21) längsverschiebbar angeordnet ist, um einen definierten Abstand (a) zwischen dem wenigstens einen Sensor (13) und dem wenigstens einen Permanentmagneten (8, 28) einzustellen.

2. Anordnung nach Anspruch 1, **dadurch gekennzeichnet, dass** der Temperaturfühler (14) längs der freien Sichtachse (21) allein oder zusammen mit dem Sensor (13) verschiebbar angeordnet ist.

3. Anordnung nach Anspruch 1 oder 2 **dadurch ge-**

**kennzeichnet, dass** der Temperaturfühler (14) zeitweise in direkten thermischen Kontakt mit der äußeren Oberfläche des sich bewegenden, zeitweise nicht bewegenden oder festen Maschinenbauteils steht, um sowohl die Temperatur des Messsystems (15) an seiner Einbauposition als auch die Temperatur an der äußeren Oberfläche des sich bewegenden, zeitweise nicht bewegenden oder festen Maschinenbauteils zu bestimmen.

**4.** Anordnung nach Anspruch 1, **dadurch gekennzeichnet, dass** der wenigstens eine Permanentmagnet (8, 28) zwischen einer Innenseite des sich bewegenden, zeitweise nicht bewegenden oder festen Maschinenbauteils und einer äußeren Oberfläche des sich bewegenden, zeitweise nicht bewegenden oder festen Maschinenbauteils angeordnet ist, wobei der wenigstens eine Permanentmagnet (8, 28) zu einem Ölfilm (6) im Innern des sich bewegenden, zeitweise nicht bewegenden oder festen Maschinenbauteils in Kontakt steht.

**5.** Anordnung nach Anspruch 1, **dadurch gekennzeichnet, dass** der wenigstens eine Permanentmagnet (8) in einer Aussparung (25) des sich bewegenden, zeitweise nicht bewegenden oder festen Maschinenbauteils derart angeordnet ist, dass eine Wand mit einer Wandstärke (d) zur Innenseite des sich bewegenden, zeitweise nicht bewegenden oder festen Maschinenbauteils verbleibt.

**6.** Anordnung nach Anspruch 5, **dadurch gekennzeichnet, dass** die Wand aus einem Material mit einer hohen Wärmeleitfähigkeit besteht und fest oder perforiert ausgebildet ist.

**7.** Anordnung nach Anspruch 1, **dadurch gekennzeichnet, dass** der wenigstens eine Permanentmagnet (8) in einer Aussparung (25) des sich bewegenden, zeitweise nicht bewegenden oder festen Maschinenbauteils derart angeordnet ist, dass die Aussparung (25) mit Luft gefüllt und mit einer Abdeckung (11) aus nicht ferromagnetischem Material verschlossen ist.

**8.** Anordnung nach Anspruch 1, **dadurch gekennzeichnet, dass** der wenigstens eine Permanentmagnet (8) in einer Aussparung (25) des sich bewegenden, zeitweise nicht bewegenden oder festen Maschinenbauteils derart angeordnet ist, dass die Aussparung (25) mit einem Gas oder Vakuum, das eine sehr geringe Wärmeleitfähigkeit und Wärmekapazität aufweist, gefüllt und mit der Abdeckung (11) verschlossen ist.

**9.** Anordnung nach Anspruch 1, **dadurch gekennzeichnet, dass** der wenigstens eine Permanentmagnet (8) in einer Aussparung (25) des sich bewegenden, zeitweise nicht bewegenden oder festen Maschinenbauteils derart angeordnet ist, dass die Aussparung (25) mit einer Vergussmasse gefüllt ist, welche eine geringe Wärmeleitfähigkeit und Wärmekapazität aufweist.

**10.** Anordnung nach Anspruch 1, **dadurch gekennzeichnet, dass** der wenigstens eine Permanentmagnet (8) in einer Aussparung (25) des sich bewegenden, zeitweise nicht bewegenden oder festen Maschinenbauteils derart angeordnet ist, dass die Aussparung (25) mit einer Schraube aus einem nichtferromagnetischen Material gefüllt ist

**11.** Anordnung nach einem der vorhergehenden Ansprüche, **dadurch gekennzeichnet, dass** mehrere Permanentmagnete (8, 28) angeordnet sind, welche auf der äußeren Oberfläche des sich bewegenden, zeitweise nicht bewegenden oder festen Maschinenbauteils gleichmäßig verteilt angeordnet sind, und dass mehrere, mit dem Gehäuse (7) verbundene Messsysteme (15) entsprechend fluchtend in einer freier Sichtachse (21) zu jeweils einem Permanentmagneten (8, 28) angeordnet sind.

**12.** Anordnung nach einem der vorhergehenden Ansprüche, **dadurch gekennzeichnet, dass** das sich bewegende, zeitweise nicht bewegende oder feste Maschinenbauteil ein Pleuellager mit einer Kurbelwelle (4) und einem Pleuel (5), oder eine Laufbuchse, oder ein Kreuzkopf, oder ein Kolbenbolzenlager ist.

**13.** Anordnung nach Anspruch 12, **dadurch gekennzeichnet, dass** bei einem Pleuellager mit einer Kurbelwelle (4) und einem Pleuel (5) als bewegendes, zeitweise nicht bewegendes oder festes Maschinenbauteil das Messsystem (15) mit einem Einbauwinkel (20) in dem Gehäuse (7) oder an dem Gehäuse (7) in der Art angeordnet ist, dass der Abstand (a) zwischen dem wenigstens einen Sensor (13) und einem definierten optimalen Punkt, an dessen Position sich der wenigstens eine Permanentmagnet (8) befindet, auf einer Bahnkurve des Pleuels (5) um die Kurbelwelle (4) bestimmt wird.

**14.** Verfahren zum Kalibrieren einer Anordnung zur berührungslosen magnetischen Temperaturmessung an einem sich bewegenden oder zeitweise nicht bewegenden oder festen Maschinenbauteil,

- wobei mit dem sich bewegenden, zeitweise nicht bewegenden oder festen Maschinenbauteil wenigstens ein Permanentmagnet (8, 28) verbunden ist und mit einem Gehäuse (7) wenigstens ein Messsystem (15), welches wenigstens einen Sensor (13) zur direkten Messung einer magnetischen Feldstärke und einen Temperaturfühler (14) umfasst, verbundenen ist,

- wobei der wenigstens eine Permanentmagnet (8, 28) einerseits zu einem Ölfilm (6) zwischen zwei sich gegeneinander bewegende oder zeitweise nicht bewegende Maschinenbauteile in Kontakt steht und andererseits dem wenigstens einen Messsystem (15) zeitweise oder permanent fluchtend auf einer freien Sichtachse (21) dem Permanentmagneten (8, 28) gegenüberliegend angeordnet ist,
- wobei das Messsystem (15) Parameter eines magnetischen Feldes des wenigstens einen Permanentmagneten (8, 28) aufnimmt,
- wobei die Parameter eine Funktion der Temperatur des sich bewegenden, zeitweise nicht bewegenden oder festen Maschinenbauteils sind,
- wobei das Messsystem (15) an einer vorgegeben Position kalibriert wird, während sich alle Maschinenbauteile in einem thermodynamischen Gleichgewicht befinden, indem der Temperaturfühler (14) längs der freien Sichtachse (21) auf einer ruhenden Oberfläche des sich bewegenden, zeitweise nicht bewegenden oder festen Maschinenbauteils eine aktuelle Bauteiltemperatur misst,
- wobei gleichzeitig das Messsystem (15) die Parameter des magnetischen Feldes des wenigstens einen Permanentmagneten (8, 28) erneut aufnimmt,
- sodass durch eine Veränderung eines vorgegebenen Abstands s zwischen Sensor (13) und der Außenseite des sich bewegenden, zeitweise nicht bewegenden oder festen Maschinenbauteils sukzessive Wertepaare $\Phi_p(s_{T=const})$, repräsentiert durch die Sensorspannung *U*, erzeugt werden, was die Korrelation zwischen den gemessenen Parametern des magnetischen Feldes $\Phi_p$, repräsentiert durch die Sensorspannung *U*, und der aktuellen Bauteiltemperatur durch einen Schnitt durch eine Kurvenschar bei einem Abstand s = const. herstellt.

**15.** Verfahren zur Durchführung einer berührungslosen magnetischen Temperaturmessung an einem sich bewegenden oder zeitweise nicht bewegenden oder festen Maschinenbauteil mit einer Anordnung nach einem der Ansprüche 1 bis 12,

- wobei wenigstens ein Permanentmagnet (8, 28) einerseits zu einem Ölfilm (6) zwischen zwei sich gegeneinander bewegende oder zeitweise nicht bewegende Maschinenbauteile in Kontakt steht und andererseits wenigstens ein Messsystem (15) zeitweise oder permanent fluchtend auf einer freien Sichtachse (21) dem Permanentmagneten (8, 28) gegenüberliegend angeordnet ist,
- wobei das wenigstens eine Messsystem (15) Parameter eines magnetischen Feldes des wenigstens einen Permanentmagneten (8, 28) aufnimmt,
- wobei die Parameter eine Funktion der Temperatur des sich bewegenden, zeitweise nicht bewegenden oder festen Maschinenbauteils sind,
- wobei ein Temperaturfühler (14) des wenigstens einen Messsystems (15) längs einer freien Sichtachse (21) auf einer ruhenden Oberfläche des sich bewegenden, zeitweise nicht bewegenden oder festen Maschinenbauteils mehrere Wertepaare einer normalen Betriebstemperatur ($T_{Betr.}^{Norm}$) ermittelt und an eine Signalverarbeitungsbaugruppe (31) weiterleitet, welche eine Aufheiz- und/oder Abkühlungskurve ermittelt,
- wobei anschließend durch einen Sensor (13) des wenigstens einen Messsystems (15) eine direkten Messung einer magnetischen Feldstärke des wenigstens einen Permanentmagneten (8, 28) ermittelt wird und an die Signalverarbeitungsbaugruppe (31) weitergegeben wird,
- wobei nach einer Auswertung der gemessenen Wertepaare des Temperaturfühlers (14) und der gemessenen Werte des Sensors (13) in der Signalverarbeitungsbaugruppe (31) eine Fehlerkorrektur der Wertepaare erfolgt, sodass eine absolute Temperaturmessung ermöglicht wird.

## Zeichnungen

Φp (TP)
1
2
3
Bereich 1A
Bereich 1B
Tc
T


Fig. 1

19
16
15
13
21
5
5a
5b
6
4
28
18
17
20
15
14
a
7
7b
7a
Detail 2.1
27
12
9

Fig. 2

23
19
22
5
5a
5b
6
4
28
24
13
21
27
7b
7

Fig. 3

5
8
25
12
11
5a
d
5b

Fig. 4a

5
8
25

Fig. 4b

5
5a
8
25
12
11
5b

Fig. 4c

5
5a
8
27
26
5b

Fig. 4d

5
29
10
5a
28
5b

Fig. 5

4
6
21
5
5a
5c
8
9
12
39
21

Fig.6

7b
7a
14
22
13
30
31
7
15

Fig. 7a

35
7b
7a
14
34
13
30
7
15
31

Fig. 7b

7
6
Detail 8.1
13
22
28
40
41

Fig. 8

$T_B$ , $T_P$
$T_{Betr.}$
$T_P$
$T_B$
$t_1$
$t_2$
t

Fig. 9a

$\Delta_1$
B
A
$\Delta_1^{Gr}$
0
$t_H$
t

Fig. 9b

$dT_P/dt$
B
A
$\Delta_4^{Gr}$
0
$t_H$
t

Fig. 9c

$\Delta_2$ ,. $\Delta_3$
$\Delta_2^{Gr}, \Delta_3^{Gr}$
0
$t_H$
t

Fig. 9d

$T_{z_i}$
$\overline{T_z}$
$Z_1$
$Z_2$
$Z_3$ ..........
$Z_N$

Fig. 9e

13
31
36
38
$\Phi_P(T_P(t))$
$U(\Phi_P(T_P(t)))$
$T_P(t)$
> $\Delta_{Gr}$
$T_B(t)$
$T_B(t)$
$\overline{T_{Betr.}}$
$T_{Betr}$
$\Delta_t^{Gr}$
$\Delta T_z^{1\,Gr}$
$\Delta T_z^{2\,Gr}$
14
37
n
$t_M$

Fig. 10

Europäisches Patentamt
European Patent Office
Office européen des brevets

# EUROPÄISCHER RECHERCHENBERICHT

Nummer der Anmeldung
EP 20 21 2688

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 8 256 954 B2 (GIORS SILVIO [IT]; BOTTAUSCIO ORIANO [IT] ET AL.) 4. September 2012 (2012-09-04) * Spalte 1, Zeilen 14-17; Abbildungen 1,3,4,6 * * Spalte 3, Zeilen 36-44 * * Spalte 5, Zeilen 1-12,35-37,42-53,57-62 * * Spalte 5, Zeile 64 - Spalte 6, Zeile 6 * * Spalte 6, Zeile 557 - Spalte 7 * * Spalte 7, Zeilen 10-15,38-54 * | 1-15 | INV. G01K7/36 G01K13/06 G01K13/08 G01K15/00 G01K1/024 |
| X | DE 16 98 071 A1 (CARL BREUER NACHF GMBH) 6. April 1972 (1972-04-06) * Seite 1, Zeilen 1-6 * * Seite 3, Zeile 28 - Seite 4, Zeile 8 * * Seite 5, Zeilen 9-17 * * Seite 5, Zeile 23 - Seite 6, Zeile 4 * | 1-15 | |
| A | DE 26 58 203 A1 (EICKHOFF GEB) 6. Juli 1978 (1978-07-06) * Seite 2, Absatz 1; Abbildung 1 * * Seite 3, Absatz 1 * | 7-10 | RECHERCHIERTE SACHGEBIETE (IPC) |
| | | | G01K |
| A | DE 298 20 623 U1 (HORN E DR GMBH [DE]) 25. Februar 1999 (1999-02-25) * Absätze [0007], [0021], [0027], [0029]; Abbildung 1 * | 12,13 | |

Der vorliegende Recherchenbericht wurde für alle Patentansprüche erstellt

| Recherchenort | Abschlußdatum der Recherche | Prüfer |
|---|---|---|
| Den Haag | 27. Mai 2021 | Phleps, Stefanie |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

1
EPO FORM 1503 03.82 (P04C03)

## ANHANG ZUM EUROPÄISCHEN RECHERCHENBERICHT ÜBER DIE EUROPÄISCHE PATENTANMELDUNG NR. EP 20 21 2688

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-05-2021

| Im Recherchenbericht angeführtes Patentdokument | Datum der Veröffentlichung | Mitglied(er) der Patentfamilie | Datum der Veröffentlichung |
|---|---|---|---|
| US 8256954 B2 | 04-09-2012 | EP 2108930 A1 | 14-10-2009 |
| | | JP 2009250246 A | 29-10-2009 |
| | | US 2009257470 A1 | 15-10-2009 |
| DE 1698071 A1 | 06-04-1972 | KEINE | |
| DE 2658203 A1 | 06-07-1978 | KEINE | |
| DE 29820623 U1 | 25-02-1999 | DE 29801910 U1 | 02-04-1998 |
| | | DE 29820623 U1 | 25-02-1999 |
| | | KR 20010040576 A | 15-05-2001 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2136809 A1
- DE 2156399 A1
- DE 19616258 A1
- DE 102014218381 A1
- JP 2006094576 A
- US 2014355644 A1
- DE 102009028749 A1
- DE 602004001444 T2